# EUROPÄISCHE PATENTSCHRIFT

(11) **EP 0 723 813 B1**
(45) Veröffentlichungstag und Bekanntmachung des Hinweises auf die Patenterteilung: **12.07.2000**
(21) Anmeldenummer: 96100826.5
(22) Anmeldetag: 21.01.1996
(51) Int. Cl.: B04C 5/04, B04C 7/00, B01D 45/12

(54) **Verfahren und Einrichtung zur Stofftrennung mittels Fliehkraft**
Method and device for separating substances by centrifugal force
Procédé et dispositif pour séparer des substances par la force centrifuge

(30) Priorität: 25.01.1995 DE 19502202
(43) Veröffentlichungstag der Anmeldung: 31.07.1996
(73) Patentinhaber: Bielefeldt, Ernst-August, Dipl.-Ing., 21354 Bleckede (DE)
(72) Erfinder: Bielefeldt, Ernst-August, Dipl.-Ing., 21354 Bleckede (DE)
(74) Vertreter: Patentanwälte Thömen & Körner

(56) Entgegenhaltungen:
- EP-A- 0 622 123
- AT-B- 383 052
- BE-A- 539 187
- DE-A- 2 945 951
- FR-A- 1 340 851

## Beschreibung

Die Erfindung bezieht sich auf ein Verfahren und eine Einrichtung zur Stofftrennung mittels Fliehkraft, wobei innerhalb einer Wirbelkammer mit annähernd koaxial und spiegelbildlich in den axialen Zentralbereich der Wirbelkammer hineinragenden Tauchrohren durch tangentiale Einleitung eines Rohgasstromes ein Wirbelfeld erzeugt wird. Obwohl eine bevorzugte Anwendung derartiger Wirbelkammern in der Abscheidung von feinstem Staub aus gasförmigen Medien besteht, können im Prinzip alle vorkommenden Stoffphasen voneinander getrennt werden, wenn nur ein hinreichender Dichteunterschied zwischen den zu trennenden Phasen besteht. In jedem Falle weisen entsprechende Einrichtungen eine Grobabtrennzone und eine Feinabtrennzone auf. Dabei unterscheiden sich die Wirbelabscheider durch die Art der Austragung des abgetrennten Mediumanteils. Die abgetrennten Partikeln werden zum einen in einem Restrohgasstrom, also mit einer Transportströmung, weitergeleitet, zum anderen werden sie durch entsprechende Austragsöffnungen ohne Unterstützung durch eine Transportströmung direkt abgeschieden. Daher bezieht sich die Erfindung auf eine Stofftrennung mit einer Wirbelkammer mit spiegelbildlichen in den Zentralbereich hineinragenden Tauchrohren, wobei die abgetrennten Partikeln in einem Restrohgasstrom weitergeleitet und/oder durch Austragsöffnungen direkt abgeschieden werden.

Eine Stofftrennung mit einer Wirbelkammer mit axial spiegelbildlichen Tauchrohren und einem Restrohgaskanal ist der US-A-4,205,965 zu entnehmen. Dabei wird der Rohgasstrom, der den Wirbel antreibt, durch einen Eintrittskanal von flachrechteckigem Querschnitt in die Wirbelkammer eingeleitet. Hierbei wird der spezifisch leichtere Anteil des Rohgases durch die in die Böden der Wirbelkammer koaxial und spiegelbildlich zu deren Mittelebene eingesetzten Tauchrohre zusammen mit dem Reingas abgesaugt. Diese Druckschrift zeigt übrigens eine Lösung, wobei in die Tauchrohre je ein weiteres Absaugrohr konzentrisch so eingesetzt ist, daß zwischen den Rohren ein Ringraum entsteht. Bei dieser Wirbelkammer erstreckt sich die Breite des flachrechteckigen Einlaufkanals bis zu deren Böden.

Eine andere Wirbelkammer mit axial spiegelbildlichen Tauchrohren und einer Direktabscheidung durch Austragsöffnungen ist der US-A-4,265,640 ent-nehmbar. Auch hierbei wird der Rohgasstrom, der den Wirbel antreibt, wieder durch einen Eintrittskanal von flachrechteckigem Querschnitt, der sich über die gesamte Wirbelkammerbreite erstreckt, in die Wirbelkammer eingeleitet. Hier ist die kreiszylindrische Wandkontur des Wirbelkammergehäuses nur durch den Rohgaseintritt unterbrochen, so daß ein Kanal für das Restrohgas entfällt. Symmetrisch zur Mittelebene der Wirbelkammer sind jedoch die hier ringspaltförmig ausgebildeten Staubaustragsöffnungen angeordnet, die sich in den rotationssymmetrischen Strömungsecken der Wirbelkammer befinden. Damit erfolgt eine axiale Austragung der abgetrennten Partikeln an Orten, an denen zusätzlich zu den Zentripetalbeschleunigungen des Wirbelfeldes überlagerte Zentripetalbeschleunigungen aus der wandnahen zweifach gekrümmten Mantelschichtströmung auftreten. Diese bei allen gattungsgemäßen Trennvorgängen anzutreffende Mantelschichtströmung ist das Ergebnis einer Überlagerung der Einlaufströmung mit einer immer vorhandenen Sekundärströmung. Die besagte Druckschrift zeigt auch als sog. Schälschlitze ausgebildete Austragsöffnungen. Dies sind im Mantel der Wirbelkammer angeordnete schlitzförmige Öffnungen, wodurch die abgetrennten Partikeln tangential aus der Wirbelkammer austreten können.

Das den vorbeschriebenen Wirbelkammern gemeinsame Merkmal, daß der Strömungseinlauf einen flachrechteckigen Querschnitt aufweist, der sich über die gesamte Breite der Wirbelkammer erstreckt, hat einen erheblichen negativen Einfluß auf den Anwendungsbereich derartiger Wirbelabscheider. Es sind nämlich im Einzelfalle nur Partikeln bis zu einer bestimmten kleinen Korngröße herunter abscheidbar. Die Abscheidung noch kleinerer Partikeln ist nicht möglich. Dies wird dadurch verursacht, daß im Kontaktbereich zwischen der Einlaufströmung und der Mantelschichtströmung starke Verwirbelungen entstehen. Diese beruhen auf einem Richtungskonflikt zwischen der Einlaufströmung und dem in der Nähe der Außenwand der Wirbelkammer drehenden Teil der Wirbelströmung (Mantelschichtströmung). Die hier entstehenden Wirbel (Turbulenzen, Mikroturbulenzen) setzen sich stromab fort und gelangen so bis in die an den Außenflächen der Tauchrohre bis zu deren Mündungen gebildete Feinabtrennzone, wo sie bereits abgeschiedene Partikeln in das Reingas befördern. Die durch die Kammerinnenwand und die Staubaustragsöffnungen gebildete Grobabtrennzone ist hiervon weniger betroffen.

Eine weitere Stofftrennung mittels Fliehkraft ist der AT-B-383 052 zu entnehmen. Diese zeigt eine Einrichtung zum Abscheiden von Feststoffen aus Gasen, bei welcher eine mit staubförmigen Feststoffen beladene Gasphase tangential einer im wesentlichen zylindrischen Kammer zuführbar ist und die gereinigten Gase axial über die Stirnflächen durchsetzende Tauchrohre abziehbar sind und für den Austrag der Feststoffe Durchbrechungen in der Stirnfläche der zylindrischen Kammer angeordnet sind, wobei vorgesehen ist, daß die axiale Länge der Zuführungsmündung für die tangentiale Zuführung der mit Feststoffen beladenen Gasphase geringer ist als die axiale Länge der zylindrischen Abscheidekammer, und daß die Zuführungsmündung in axialer Richtung in Abstand von der oder den Durchbrechung(en) für den Austrag der Feststoffe angeordnet ist. Die hier angegebene Maßnahme beruht auf dem Bestreben, in den Bereichen zwischen der tangentialen Zuführung und den Stirnflächen eine exakt zylindrische Führung der Strömung zu ermöglichen, um hierdurch hochfrequente Pulsationen im Bereich der Staubaustragsöffnungen und eine damit verbundene Rückmischung bereits abgeschiedener Staubteilchen zu vermeiden. Dieser Druckschrift ist kein Hinweis darauf zu entnehmen, daß die angegebenen Maßnahmen etwas damit zu tun haben, daß schädliche Wirbel (Turbulenzen) im Bereich der besagten Kontaktzone vermieden werden, um deren Auswirkung auf die Feinabtrennzone zu vermeiden. Vielmehr zielt die geringere axiale Länge der Zuleitungsmündung auf schädliche Wirkungen im Bereich der Staubaustragsöffnungen und damit im Bereich der Grobabtrennzone.

Daher liegt der Erfindung die Aufgabe zugrunde, die Einlaufströmung bei einem Verfahren zur Stofftrennung mittels Fliehkraft sowie einer entsprechenden Einrichtung der eingangs genannten Art so auszubilden, daß das Einlaufströmungsfeld bereits vor dem Zusammentreffen mit der Mantelschichtströmung eine der Richtung der Mantelschichtströmung entsprechende Aufspreizung aufweist.

Diese Aufgabe wird bei den gattungsgemäßen Gegenständen durch die Merkmale der Patentansprüche 1 und 3 gelöst.

Hierdurch wird ein unkontrolliertes Zusammentreffen beider Strömungen vermieden und ein glatter Übergang der Einlaufströmung in die Mantelschichtströmung erreicht. Dies führt zur Vermeidung von im Kontaktbereich beider Strömungen entstehenden Turbulenzen, deren Ausläufer bis in die Feinabtrennzone vordringen und hier die Abtrennung feinster Partikeln stören könnten.

Vorteilhafte Weiterbildungen der Erfindung sind in den Unteransprüchen angegeben.

Die Erfindung ist anhand von Zeichnungen dargestellt und nachfolgend näher erläutert. Es zeigen
- Fig. 1: eine kreiszylindrische Wirbelkammer, mit einem Einlauf von teilaxialer Länge,
- Fig. 2: die Wirbelkammer nach Fig. 1 schematisch im Längsschnitt,
- Fig. 3: eine Wirbelkammer mit mehreren Rohreinläufen,
- Fig. 4: die Rohreinläufe nach Fig. 3 in paralleler Anordnung,
- Fig. 5: die Rohreinläufe nach Fig. 3 in divergenter Anordnung,
- Fig. 6: einen Querschnitt durch eine Wirbelkammer mit auf dem Umfang verteilten Rohreinläufen,
- Fig. 7: perspektivisch einen abgewickelten Wirbelkammermantel mit einem weiteren Rohreinlauf,
- Fig. 8: einen Wirbelkammermantel mit einem Trapezeinlauf,
- Fig. 9: einen Rohreinlauf mit gerader Einlaufführung,
- Fig. 10: den Rohreinlauf nach Fig. 9 mit einem Wirbelkammermantel,
- Fig. 11: einen eingezogenen Einlauf nach in Entwurfsdarstellung mit Stromlinien,
- Fig. 12: eine Ausgestaltung des Einlaufs nach Fig. 11,
- Fig. 13: einen eingezogenen Einlauf, gebildet aus einem Halbkreisprofil,
- Fig. 14: einen eingezogenen Einlauf, gebildet aus einem U-Profil,
- Fig. 15: einen Querschnitt durch eine Wirbelkammer mit Einläufen nach den Fign. 13 und 14,
- Fig. 16: eine weitere Ausgestaltung eines eingezogenen Einlaufs mit einer Zunge,
- Fig. 17: eine Wirbelkammer mit einem Einlauf nach Figur 16,
- Fig. 18: eine Ausgestaltung des Einlaufs nach Fig. 16 mit einer Spaltstütze,
- Fig. 19: einen Ausschnitt für einen eingezogenen Einlauf mit zwei Zungenhälften,
- Fig. 20: einen eingezogenen Einlauf mit zwei Zungenhälften, basierend auf dem Ausschnitt nach Fig. 19,
- Fig. 21: eine Ausgestaltung des Einlaufs nach Fig. 19 mit einer gefalteten Spaltstütze,
- Fig. 22: einen eingezogenen Einlauf mit einem Einlaufbett zur Erzeugung seitlicher Stufenwirbel,
- Fig. 23: eine Stufe mit einem Wirbel,
- Fig. 24: eine Ausgestaltung einer Stufe mit einer Abströmkante,
- Fig. 25: eine Ausgestaltung einer Stufe mit einer Anströmkante,
- Fig. 26: eine Ausgestaltung des Einlaufs nach Fig. 22 mit einer gewölbten Bodenfläche,
- Fig. 27: eine Wirbelkammer mit einem umlaufenden Einlauf in Form eines Spiralgehäuses,
- Fig. 28: einen zentralen Querschnitt durch die Wirbelkammer nach Fig. 38,
- Fig. 29: eine Weiterbildung eines Einlaufs mit vier Teilspiralen,
- Fig. 30: eine Wirbelkammer mit einem rotationssymmetrischen Außengehäuse und einem inneren Zylindermantel,
- Fig. 31: einen zentralen Querschnitt durch die Wirbelkammer nach Fig. 30,
- Fig. 32: eine Weiterbildung der Wirbelkammer nach Fig. 30 mit einer ringförmigen Stützplatte,
- Fig. 33: eine Weiterbildung der Wirbelkammer nach Fig. 32 mit zwei symmetrischen Einzelgehäusen,
- Fig. 34: einen Querschnitt durch eine Wirbelkammer mit umlaufendem Spiralgehäuse von kreisförmigem Querschnitt,
- Fig. 35: eine Seitenansicht des Spiralgehäuses nach Fig. 34,
- Fig. 36: eine Wirbelkammer mit einem geraden Schälschlitz,
- Fig. 37: eine Rückansicht der Wirbelkammer nach Fig. 36,
- Fig. 38: eine Seitenansicht der Wirbelkammer nach Fig. 36,
- Fig. 39: perspektivisch eine Wirbelkammer mit einem V-förmigen Schälschlitz,
- Fig. 40: einen Querschnitt durch eine Wirbelkammer mit einem Schälschlitz nach Fig. 39,
- Fig. 41: einen Längsschnitt durch eine tonnenförmige Wirbelkammer,
- Fig. 42: eine Seitenansicht der Wirbelkammer nach Fig. 41,
- Fig. 43: eine Ausgestaltung der Wirbelkammer nach Fig. 42 mit einem am Einlauf angeordneten Flansch,
- Fig. 44: eine Draufsicht eines Wirbelkammermoduls,
- Fig. 45: eine Hauptansicht einer Multiwirbelkammeranlage,
- Fig. 46: eine Seitenansicht der Multiwirbelkammeranlage nach Fig. 45,
- Fig. 47: eine tonnenförmige Wirbelkammer mit einem Schälschlitz,
- Fig. 48: eine Seitenansicht der Wirbelkammer nach Fig. 47,
- Fig. 49: eine Hauptansicht einer Multiwirbelkammeranlage mit Wirbelkammern nach Fig. 47,
- Fig. 50: einen Horizontalschnitt durch die Multiwirbelkammeranlage nach Fig. 49,
- Fig. 51: eine Draufsicht eines Vierfachmoduls, gebildet aus zylindrischen Wirbelkammern mit axialen Austragsspalten,
- Fig. 52: eine Wirbelkammer mit einer Einspritzdüse,
- Fig. 53: eine vergrößerte Darstellung der Einspritzdüse nach Fig. 52 und
- Fig. 54: einen Wirbelkammerblock, mit einem System von Einspritzdüsen, gebildet aus Modulen, bestehend aus zylindrischen Wirbelkammern mit Schälschlitzen.

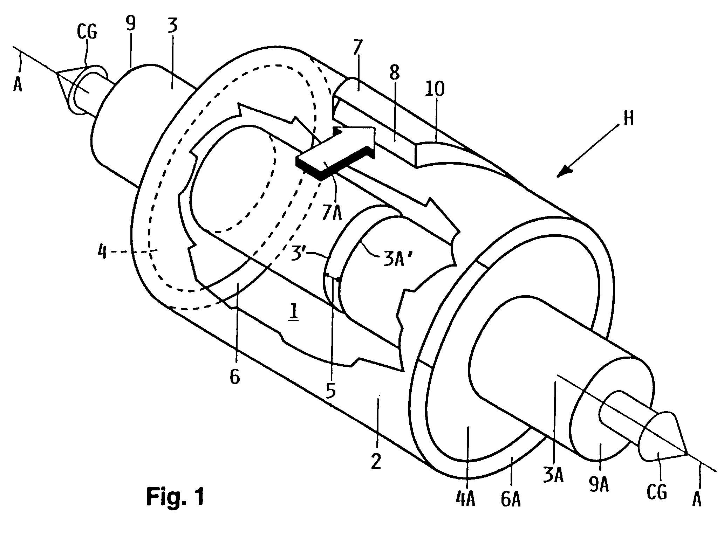

In Fig.1 ist eine kreiszylindrische Wirbelkammer mit einem Gehäuse H mit einer Längsachse A und einem mittigen Einlauf 7 mit rechteckigem Eintrittsquerschnitt dargestellt. Fig.1 zeigt die Wirbelkammer 1 in perspektivischer Gesamtansicht mit aufgebrochenem Wirbelgehäuse 2. Die konzentrisch zur Wirbelkammerachse paarig angeordneten Tauchrohre 3,3A durchdringen die ebenfalls konzentrisch angeordneten Wirbelkammerböden 4,4A und sind mit ihren Absaugemündungen 3',3'A axialsymmetrisch bis in den axialen Zentralbereich der Wirbelkammer geführt. Die Wirbelkammerböden weisen kleinere Durchmesser als das Wirbelgehäuse auf und bilden dadurch ringförmige Austragsspalte 6,6A mit dem Wirbelgehäuse. Der staubbeladene Rohgasvolumenstrom 7A tritt durch den mittig in Bezug auf die Längserstreckung der Wirbelkammer angeordneten Einlauf 7 mit rechteckigem Eintrittsquerschnitt 8 ein. Ein gleichgroßer Reingasvolumenstrom CG tritt durch die beiden äußeren Tauchrohrenden 9,9A zu gleichen Volumenstromanteilen von Staub gereinigt aus. Der in der Wirbelkammer durch Zentrifugieren abgetrennte Staub wird durch die beiden Austragsspalte 6,6A zweiseitig abgeschieden. Darum wird die Wirbelkammer vorzugsweise mit horizontaler Achse (liegend) in Wirbelkammeranlagen eingebaut. Seitliche Staubtransporträume für den Transport des abgeschiedenen Staubes zum Bunker sind hier nicht eingezeichnet. Der Einlauf 7 weist eine einfache Bauform mit rechteckigen Strömungsquerschnitten auf, die ein Strömungsführungsbett 10 bilden, das zum Wirbelgehäuse hin offen ist für die Verbesserung des Wirbelantriebs, aber ein außerhalb der kreiszylindrischen Wirbelgehäusebegrenzung liegendes Bauteil darstellt. Die rechteckigen Strömungsquerschnitte weisen in Strömungsrichtung abnehmende radiale Höhen und zunehmende axiale Breiten auf. Die Breitenzunahme ist der örtlichen Krümmung der natürlichen Sekundärstromlinien angepaßt, um die Antriebswirkung der Einlaufströmung zu verbessern.

Jede tangentiale Einströmung in eine derartige Wirbelkammer hat eine Sekundärströmung zur Folge. Diese Strömung ist am Wirbelkammermantel axial nach außen gerichtet und verläuft über die Wirbelkammerböden radial nach innen und dann außen an den Tauchrohren entlang axial nach innen. Infolge des Strömungseinlaufs 8 mit geringer axialer Erstreckung und der anschließenden Erweiterung in axialer Richtung erfolgt ein glatter Übergang der Einlaufströmung in die Sekundärströmung. Dies bedeutet, daß die Einlaufströmung bereits beim Zusammentreffen mit der Sekundärströmung mit dieser gleichgerichtet ist. Hierdurch werden die für bisherige Wirbelkammern typischen Richtungskonflikte zwischen der Einlaufströmung und der Sekundärströmung weitgehend vermieden, was unmittelbar zur Folge hat, daß die aus dem Richtungskonflikt resultierenden Zusatzverwirbelungen wesentlich reduziert oder vermieden werden. Da die Höhe des Eintrittsquerschnitts 8 gegenüber bisherigen Lösungen jetzt wesentlich vergrößert ist, ergeben sich im größten Teil des Eintrittsquerschnitts keine Geschwindigkeitsgradienten. In dieser Wirbelkammer 1 finden zwei unterschiedliche Abscheidevorgänge statt, und zwar eine Grobabscheidung im Bereich der Austragsspalte 6,6A und eine Feinabscheidung im Bereich der Absaugemündungen 3',3'A, die einen axialen Abstand 5 aufweisen.

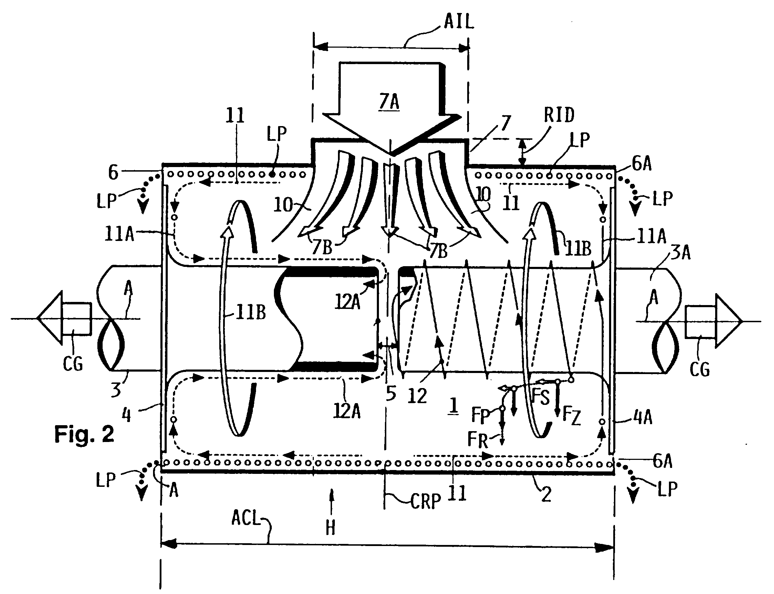

Fig. 2 erläutert den zweifachen Partikelabtrennvorgang im Detail anhand einer Axialschnittdarstellung der Wirbelkammer nach Fig. 1 mit den Elementen 1 bis 7. Der Rohgasvolumenstrom 7A durchläuft zunächst ein Einlaufströmungsfeld 7B. Eine aus der Wirkung der Sekundärströmung resultierende Mantelringschichtströmung 11, hier mit Meridiangeschwindigkeitskomponenten dargestellt, bildet neben ihrer Aufgabe für den Drehimpulstransport zugleich eine Grobabtrennzone. Mit der Rohgasströmung eingetretene gröbere Partikeln werden durch eine Schraubenströmung der Grobabtrennzone zu den Austragsspalten 6,6A transportiert und dort als abgetrennte Partikeln ausgetragen ausgetragen, ohne in die im Bereich der Tauchrohraußenwände befindlichen Feinabtrennzonen zu gelangen. Eine Feinabtrennzonenseite ist hier am Tauchrohr 3A vereinfacht durch eine Schraubenstromlinie 12 dargestellt, während am genüberliegenden Tauchrohr 3 der zu dessen Reingasabsaugemündung führende Meridianfluß im Zusammenhang mit dem Meridianfluß in der gesamten Wirbelkammer gezeigt ist, um zu erläutern, auf welchem Weg der Rohgasvolumenstrom 7A in den Wandschichtströmungen durch die Wirbelkammer geführt und dabei in Reingas CG verwandelt wird. Die Schraubenströmung der Feinabtrennzone führt zu dem an einer Partikel angreifenden Partikelabtrennkräftemechanismus aus zwei aufeinander senkrecht stehenden Kräften Fz ud Fs. Hierdurch wird eine Hochleistungstrennung ermöglicht, wodurch feinste Partikeln abtrennbar sind. Eine Partikelzentrifugalkraft Fz verschiebt die Partikel in radialer Richtung. In axialer Richtung wird die Partikel durch eine in der Feinabtrennzone axial gerichtete Partikelschleppkraft Fs der dem Wirbel überlagerten Senkenströmung verschoben, und zwar in unmittelbarer Tauchrohrnähe stärker und radial weiter nach außen schwächer, weil die Geschwindigkeit der am Tauchrohr axial gerichteten Senkenströmung außerhalb der Tauchrohrgrenzschicht mit wachsendem Radius zunächst stark abnimmt und dann schwächer asymptotisch gegen Null (0) strebt. Weiterhin nimmt die Partikelzentrifugalkraft mit zunehmendem Radius ab, weil die Zentripetalbeschleunigung mit wachsenden Abstand zur Wirbelachse abnimmt. So kommt der komplexe Verschiebungsweg der Partikeln beim Trennvorgang zustande, der hier im Bild für ein mitrotierendes Koordinatnsystem etwa bis zur radialen Mitte des Wirbelfeldes dargestellt ist. Die in den Feinabtrennzonen bis zu feinsten Korngrößen abgetrennten Partikeln werden über derartige Verschiebungswege in die Mantelringschichtströmung 11 zurückverschoben und mit höherer Wahrscheinlichkeit bei diesem zweiten Durchlauf ausgetragen, oder sie müssen mehrere Durchläufe bis zu ihrem Austrag vollziehen, weil sie zum Beispiel durch komplexe Stoßvorgänge bei höheren Staubkonzentrationen in der Wandschichtströmung häufiger an den Austragsspalten vorbeigeführt werden.

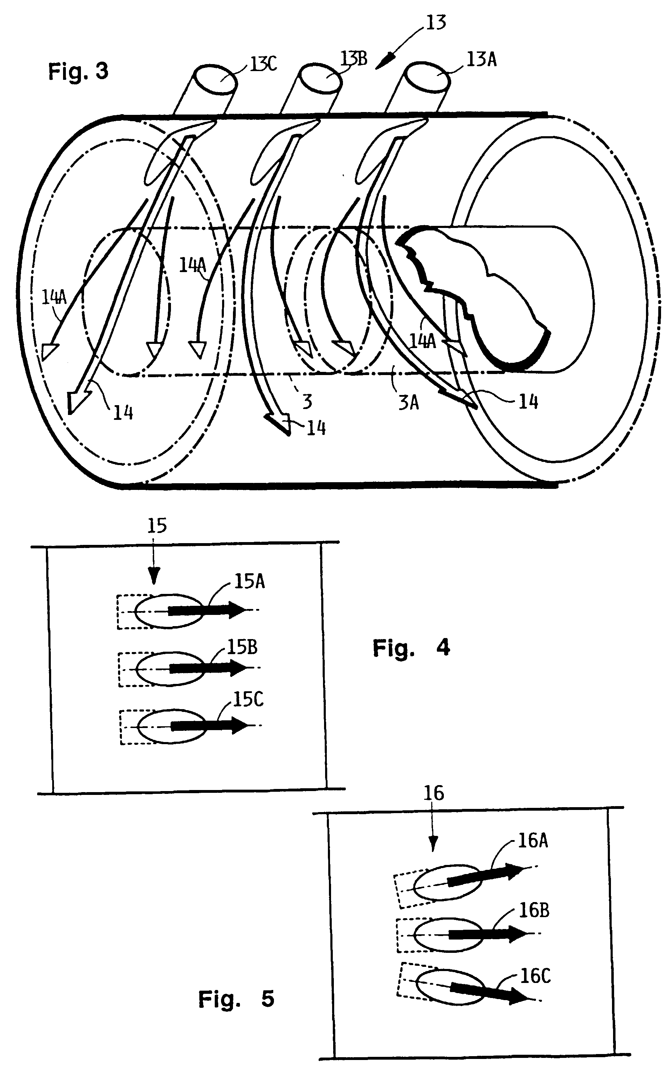

In Fig. 3 ist eine einfache Einlaufgruppe 13 in paralleler Dreifachanordnung von geraden Rohreinläufen 13A,13B,13C dargestellt. Jeder Rohreinlauf stellt ein baulich sehr einfaches Einzelteil dar. Ein derartiger Rohreinlauf kann auch als Einzeleinlauf verwendet werden. Das hier entstehende Einlaufströmungsfeld 14 zeigt die angestrebte freie Sekundärströmungsanpassung mit dem symmetrischen axialen Aufspreizen in Stromlinien 14A in Strömungsrichtung. Mit derartigen Gruppenanordnungen lassen sich noch verlustärmere Impulseinleitungen und damit noch höhere Drehströmungsgeschwindigkeiten in der Feinabtrennzone an den Tauchrohren erreichen.

Fig. 4 zeigt eine Einlaufgruppe 15 mit parallel gerichteten Austrittsstrahlen 15A,15B,15C. In Fig. 5 ist eine Dreifachanordnung 16 mit axialsymmetrisch aufspreizenden Hauptaustrittsrichtungen 16A,16B,16C der Austrittstrahlen dargestellt. Durch unterschiedliche Neigungen der Strahlaustrittsrichtungen der einzelnen Rohreinläufe einer Einlaufgruppe lassen sich weitere Verbesserungen in der freien Sekundärströmungsanpassung erzielen.

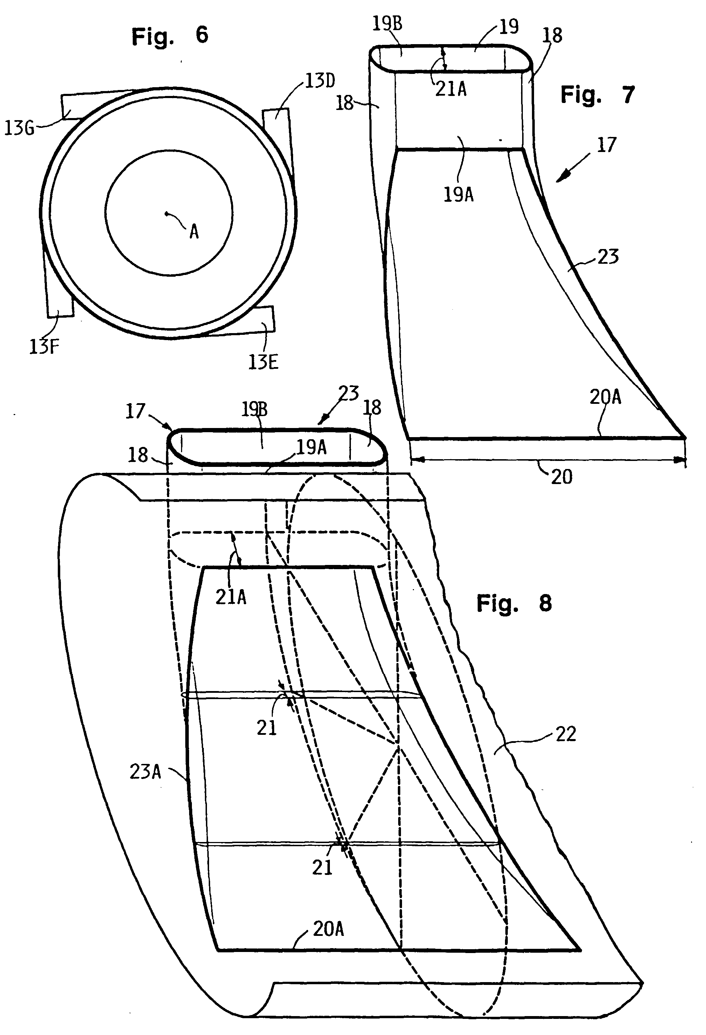

Fig. 6 zeigt, daß sowohl Einzeleinläufe als auch Einlaufgruppen über den Wirbelgehäuseumfang verteilt mit beliebigen Anzahlen von Einzeleinläufen 13D, 13E,13F,13G zur Verbesserung des Antriebs und der Trennleistung angeordnet werden können. Neben den strömungstechnischen Vorteilen derartiger Rohreinläufe ergeben diese auch fertigungstechnische Vorteile, da sie einfach aus vorgefertigten Halbfabrikaten herstellbar sind. Dabei sind auch andere als kreisförmige Rohrquerschnitte denkbar.

Fig. 7 zeigt vereinfacht räumlich abgewickelt eine strömungs- und fertigungstechnisch einfache Auslegung des rohrartigen Halbfabrikates 17, dessen an den Ecken gleichgerundete Querschnitte 18 mit radial konstanter Breite eine axiale Höhenverteilung aufweisen, die zu axialsymmetrischen Seitenwandkrümmungen 19 des Einlaufes 20 führt. Dadurch wird eine Sekundärströmungsanpassung möglich. Entsprechend der radialen Breitenverteilung 21 in Strömungsrichtung wird von dem rohrartigen Halbfabrikat 17 ein verlorener Abschnitt abgetrennt, so daß ein Fertigteil des Einlaufes entsteht. In Fig. 8 ist der mit einem Wirbelgehäusemantel 22 zusammengefügte Einlauf 23 perspektivisch dargestellt.

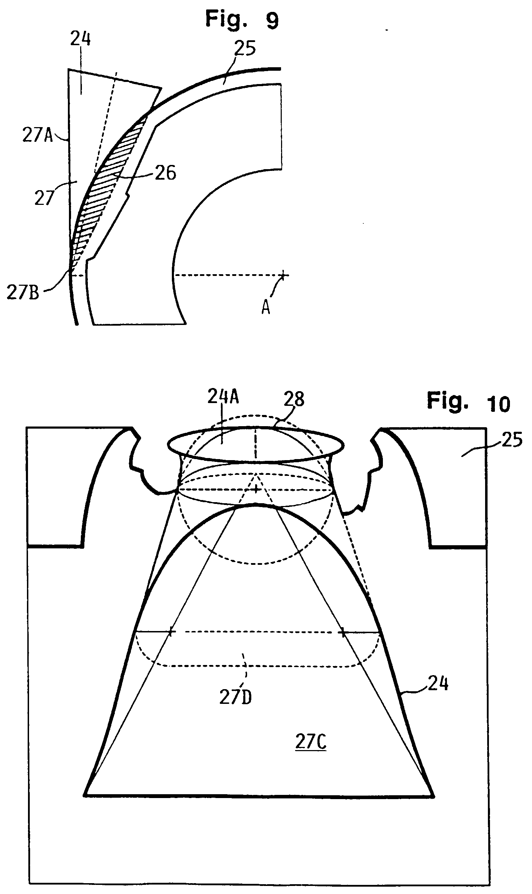

Die Fign. 9 und 10 zeigen einen aerodynamisch und fertigungstechnisch vorteilhaften Rohreinlauf mit einer geraden Einlaufführungsstrecke 24. Dabei wird eine fertigungstechnische Vereinfachungen dadurch erzielt, daß statt einer denkbaren geschlossenen beschleunigten Krümmerführungsstrecke eine einfachere geschlossene beschleunigte gerade Führungsstrecke gewählt wird. Diese wird vorzugsweise zu einem Halbfabrikat vorgefertigt aus einem Rohrkegelstumpf, der nach Fig. 9 einseitig flachgedrückt wird, hier bis auf den Querschnitt Null (0), so daß dabei gerade Mantellinien entstehen. Dieses vollständige Flachdrücken vereinfacht den Fertigungsvorgang dadurch, daß die seitlichen Ausrundungen mit dem Ausrundungsradius bis zur Einlaufhinterkante linear auf Null (0) abnehmen. Von dem Halbfabrikat wird dann in der Fertigungsendstufe entsprechend dem Krümmungsradius des hier angewendeten kreiszylindrischen Wirbelgehäuses 25 ein verlorener Abschnitt 26 abgetrennt. Die Verwendung eines Kegelstumpfes bringt den Vorteil, daß beim Flachdrücken eine stärkere axialsymmetrische Querschnittsaufspreizung im Sinne einer günstigen Sekundärströmungsanpassung erzielt wird, als dies bei einem zylindrischen Rohrstück als Ausgangsformteil möglich wäre. Den auf diese Weise entstandenen hinteren Einlaufteil 27 zeigt Fig. 10 in der Draufsicht zusammen mit einem aufgesetzten düsenartigen Einlaufvorderteil 28.

Nachfolgend werden einige sogenannte eingezogene Einläufe beschrieben. Das vollständige Einziehen des Einlaufes in das Wirbelgehäuse einer Wirbelkammer bringt wesentliche bautechnische Vereinfachungen der Einzelwirbelkammern und Montagevereinfachungen sowie Wartungserleichterungen bei Multiwirbelkammeranlagen; denn die Einzelwirbelkammern können so einfach parallel in Lochwänden mit engen Vielfachlochanordnungen aus Kreislöchern für kleines Anlagenbauvolumen arretiert werden. Die Parallelanordnung erfolgt vorzugsweise in zwei Lochwänden mit schnell und einfach lösbaren speziellen Befestigungseinrichtungen.

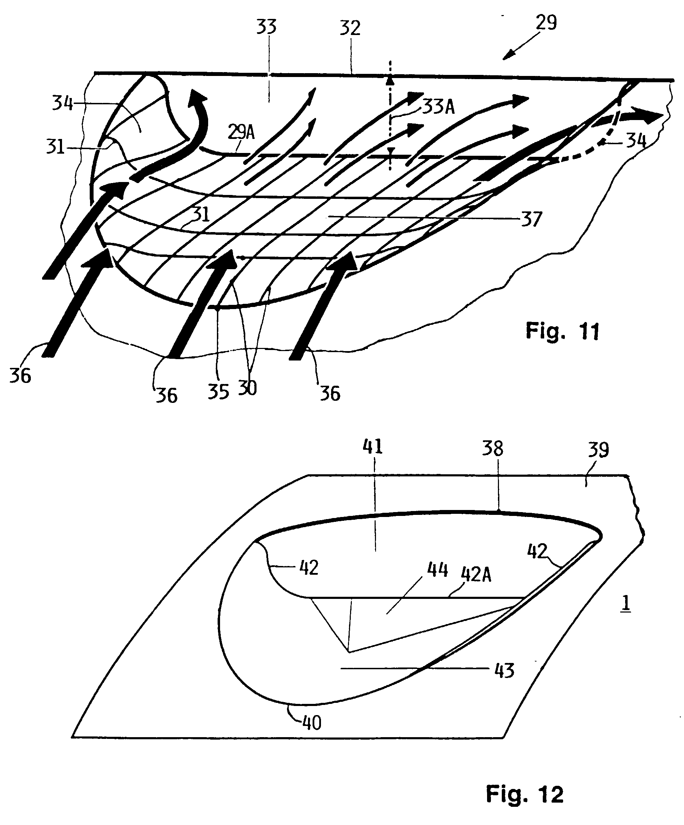

In Fign. 11 ist ein eingezogener aerodynamischer Einlauf dargestellt, der eine Kombination mehrfacher günstiger aerodynamischer Gestaltungsmerkmale aufweist. Das Bild zeigt diesen eingezogenen aerodynamischen Einlauf 29 in perspektivischer skelettmäßiger Darstellung, wobei sich kreuzende Mantellinien verwendet werden, um seine Formgebung und Integration in das Wirbelgehäuse für eine optimale Antriebsströmung zu veranschaulichen. Deshalb sind Mantellinien in Mittelströmungsrichtung als Längsmantellinien 30 und Mantellinien quer dazu als Quermantellinien 31 dargestellt. Der Einlauf 29 weist eine gerade Einlaufhinterkante 32 auf. Dabei wird die ankommende Sekundärströmung auch teilweise radial zum Wirbelinnern abgedrängt. Aus diesem Grunde darf die Einlaufausdehnung radial nach innen nicht zu weit erfolgen, da sonst die Rotationssymmetrie der Wirbelströmung zu stark gestört wird. Der Einlauf wird daher von innen abgeflacht unter Beibehaltung eines rechteckähnlichen Eintrittsquerschnittes 33 mit kleinerem Seitenverhältnis, das wiederum für einen dickeren Eintrittstrahl für besseren Wirbelantrieb und höhere Trennleistungen erforderlich ist. Der rechteckähnliche Eintrittsquerschnitt 33 weist S-förmige Seitenbegrenzungen 34 auf, die sich nach stromaufwärts in den Quermantellinien 31 unter allmählicher Abflachung bis zum Einlaufvorderkantenpunkt 35 fortsetzen. Auch die Längsmantellinien 30 sind leicht S-förmig gekrümmt. Im günstigen Mantellinienstrak mit der stärker gleichmäßig gebogenen Einlaufvorderkante 36 ergibt sich so ein vorteilhaftes äußeres Einlaufbett 37. Die S-förmig gekrümmten Mantellinien wirken sich auch verlustmindernd auf die Innenströmung der Wirbelkammer aus.

Fig. 12 zeigt eine leicht abgewandelte Ausgestaltung eines Einlaufs mit einer Einlaufvorderkante 40 und einer hier jedoch gebogenen Einlaufhinterkante 38. Der Einlauf ist mit einem Ausschnitt 39 eines zylindrischen Wirbelgehäuses gezeigt und weist im übrigen wieder einen Eintrittsquerschnitt 41, S-förmige Seitenbegrenzungen 42 und ein äußeres Einlaufbett 43 auf, wobei ein dreieckförmiger Teil 44 einen ebenen Verlauf zeigt.

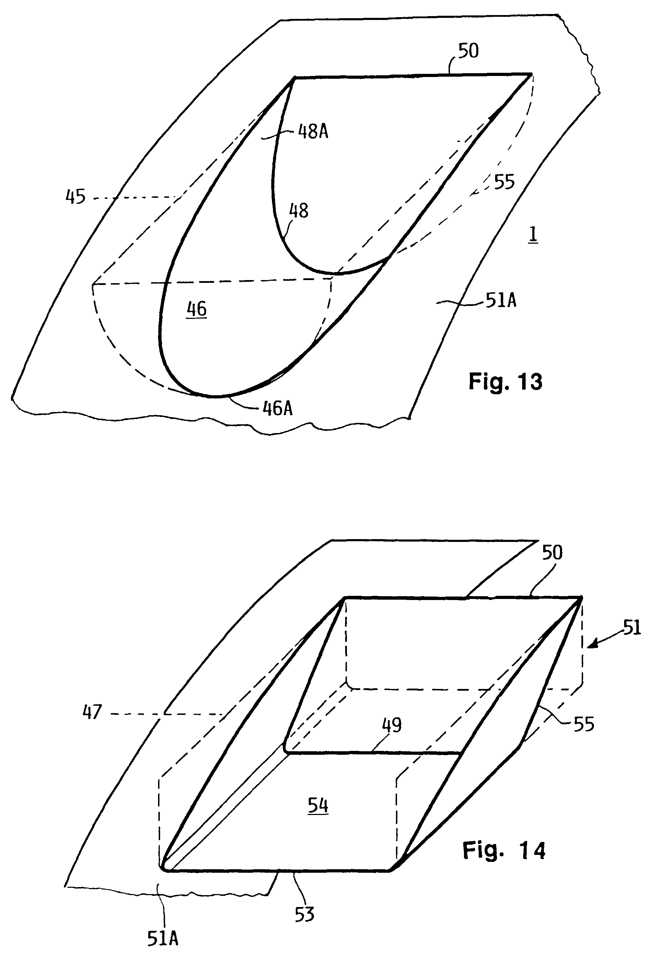

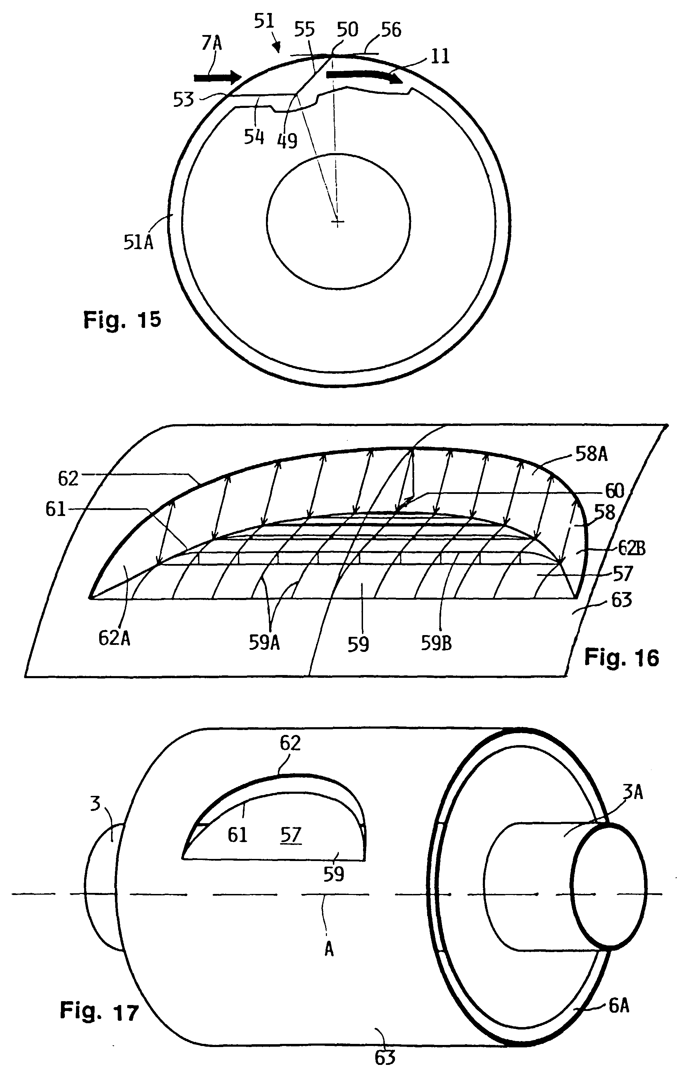

In den Fign. 13 bis 15 sind fertigungstechnisch stark vereinfachte Varianten eingezogener Einläufe dargestellt. Von der Bewertung der Strömungsgüte her müssen solche Vereinfachungen strömungstechnische Kompromißlösungen darstellen. Fig. 13 zeigt einen eingezogenen Einlauf, der in einfachster Weise aus dem Halbfabrikat eines Halbkreisprofils 45 gefertigt ist. Es können auch andere Profilquerschnittsformen zur Anwendung kommen, die kompromißgeeignete Sammeleigenschaften im Ansaugbereich sowie günstigere Strömungsführungseigenschaften im Einlaufbett 46 entfalten können. Ein weiteres Beispiel hierzu zeigt Fig. 14: Hier ist ein flacheres U-Profil 47 als Halbfabrikat zur Herstellung eines Einlaufbetts 51 gewählt. Die eingezogenen Profileinläufe nach Fig. 13,14 weisen strömungstechnisch günstige Besonderheiten auf: Beide Einläufe sind mit hinterschnittenen Führungsbetthinterkanten 48 und 49 versehen. Diese Hinterschneidungen bringen mehrere strömungstechnische Vorteile: Einmal werden dadurch die Führungsbettlängen vorteilhaft verkürzt und dadurch die strömungsbremsenden Wandreibungsflächen verkleinert, aber die angestrebte Minimierung der Mantelfläche des Profilführungsbettes bringt auch den Vorteil der Verkleinerung besonderer profilformbedingter Verlustzonen, in denen spezielle Strömungsverluste auftreten können, wie beispielsweise Eckenströmungsverluste durch das U-Profil 47 nach Fig. 14. Das Profilführungsbett wird vorteilhaft so verkleinert, daß es es die strömungstechnischen Anforderungen der Strömungssammlung und der anschließenden Strömungsführung gerade erfüllt. Weiterhin bietet die Hinterschneidungskonstruktion den Vorteil einer stoßfreien Anströmung der Einlaufhinterkante 50 nach Fign. 13,14. Die Einlaufhinterkante wird bei stoßfreier Anströmung tangential angeströmt, bezogen auf den Umfangskreis des Wirbelgehäuses. Dann entstehen keine Stoßverluste durch Ablöseblasen der Strömung im Wirbelgehäuseinneren kurz hinter der Einlaufhinterkante. Die Ablöseblasen würden zusätzlich Turbulenz generieren, die mit der Einlaufströmung in das Wirbelströmungsfeld mit seinen Abtrennzonen eindringt und die Abscheideleistung durch turbulente Diffusion mindert. Die Einlaufhinterkante kann bei stoßfreier Anströmung vorteilhaft einfach scharf ausgebildet werden. Die Hinterschneidungskonstruktion wird am einfachsten anhand der radialen Gesamtansicht von Einlauf mit Wirbelkammer nach Fig. 15 beschrieben: Die Strömung wird im Einlaufbett 51 etwa parallel ausgerichtet nach dessen unterer Begrenzung 52. In Fig. 13 ist die untere Begrenzung identisch mit der unteren Mantellinie 53, während die untere Begrenzung in Fig. 14 durch die untere Begrenzungsebene 54 gebildet wird. Nach Fig. 15 wird die Projektionsgerade 55 der Hinterschneidung nun so weit geneigt, bis die Kreistangente durch ihren Schnittpunkt 56 mit dem Umfangskreis des Wirbelgehäuses parallel verläuft zur unteren Begrenzung 52 des Einlaufbettes. Dann liegt in guter Näherung weitgehend stoßfreie Anströmung an der Einlaufhinterkante 50 vor.

Die Fig. 16 bis 18 zeigen fertigungstechnische Ausgestaltungen von eingezogenen Einläufen. Der Einlauf nach Fig. 16 besteht im wesentlichen aus einer Zunge 57 mit einer Zungenhinterkante 61 und einer Einlaufhinterkante 62.

Die Zunge 57 ist zweifach gekrümmt, wie die Konstruktionslinien erkennen lassen. Hierdurch ergibt sich eine sichelförmige Einlaufform. Die zweifache Zungenkrümmung wirkt sich vorteilhaft auf die Ausbildung einer weitgehend konstanten Spaltweitenverteilung 58 bis weit in die axial seitlichen Eckenzonen des Einlaufbettes 59 hinein aus. Weiterhin wird die Ausbildung einer konstanten Spaltweitenverteilung vorteilhaft unterstützt durch eine Hinterschneidung 60.

Fig. 17 zeigt eine Wirbelkammer 63 mit einem sichelförmigen Einlauf wie vorbeschrieben. Die Wirbelkammer 63 ist nach außen ausschließlich kreiszylindrisch begrenzt, weil der Einlauf eingezogen ist.

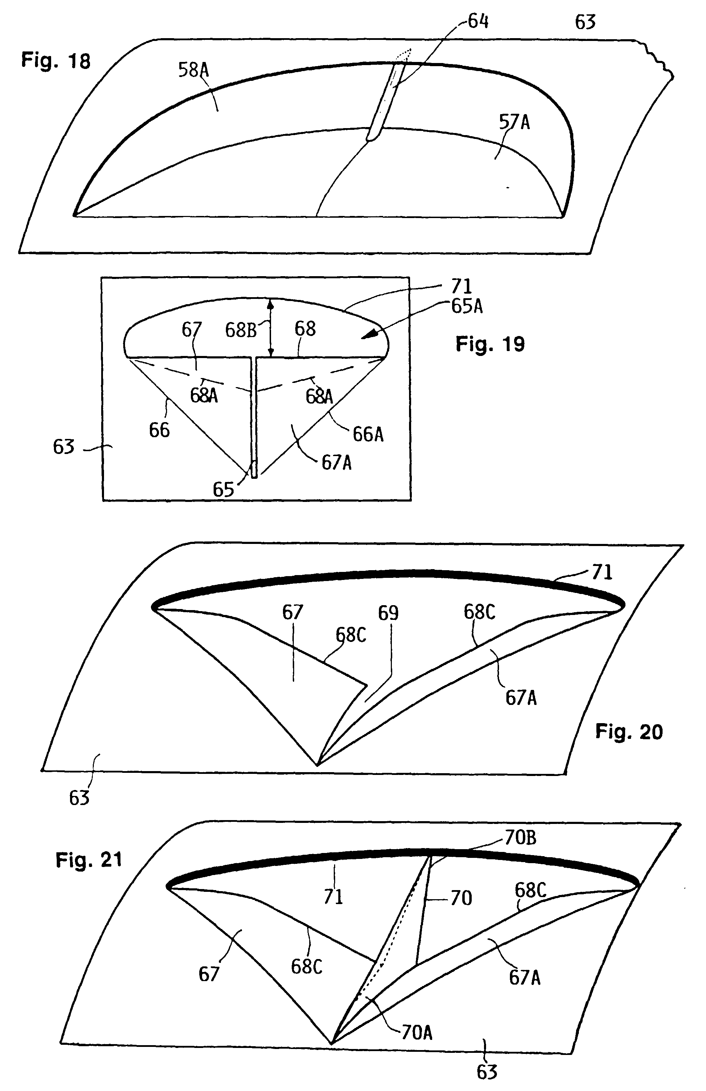

Fig. 18 zeigt eine Abwandlung des Einlaufes nach Fig. 17. Hier ist in axialer Einlaufmitte des Eintrittsspaltes eine Spaltstütze 64 angeordnet, die vorteilhaft der genauen Spaltweiteneinstellung dient. Es können auch mehrere Spaltstützen im Eintrittsspalt angeordnet werden.

Die Fign. 19 bis 21 zeigen eine weitere vereinfachende Abwandlung eines eingezogenen Einlaufes. Das besondere fertigungstechnische Merkmal dieser Ausgestaltungen besteht nach der abgewickelten Darstellung in Fig. 19 aus einem in der axialen Wirbelkammermittelebene angeordneten schmalen geraden Einschnitt 65, durch den zwei axialsymmetrische und keilförmig verlaufende seitliche Begrenzungen 66 des Einlaufbettes erzeugt werden, die in der Abwicklung gerade oder gekrümmt verlaufen, um ein vorteilhaftes verlustarmes Überströmen zu ermöglichen. Zwischen dem Einschnitt 65 und den Begrenzungen 66 liegen zwei Zungenhälften 67, deren Zungenhinterkanten 68 gerade in Richtung der Mantellinien des hier kreiszylindrisch gewählten Wirbelgehäuses verlaufen. Die beiden geraden Zungenhinterkanten 68 können aber auch V-förmig symmetrisch angeordnet sein im Sinne einer Verstärkung des Hinterschneidungseffektes zur axialen Wirbelkammermittelebene hin. Weiterhin können die Zungenhinterkanten symmetrisch gekrümmt ausgebildet werden, um die Einlaufströmung der sich im Wirbelgehäuse fortsetzenden Auffächerung auf einfachste Weise durch Hinterschneiden günstig anzupassen. Die Zungenhälften 67 werden in das Wirbelgehäuse so hineingebogen, daß an den seitlichen Einlaufbegrenzungen 66 sanft gekrümmte Strömungsübergänge beginnen. Weiter zur axialen Wirbelkammermitte hin werden die Zungenhälften 67 vorteilhaft einfach eben belassen, wie dies Fig. 20 in perspektivischer Darstellung veranschaulicht: Durch das Hineinbiegen der Zungenhälften 67 in das Wirbelgehäuse entsteht zwischen den Zungenhälften ein keilförmiger Spalt 69, der bei der Einlaufvariante nach Fig. 20 aus Einfachheitsgründen offen belassen wird, da die hierdurch verursachten Strömungsverluste gering sind. Der Spalt 69 kann aber auch durch einen Blechkeil verschlossen werden.

In Fig. 21 ist eine weitere Einlaufvariante dargestellt, bei der der keilförmige Spalt 67 nach Fig. 20 durch eine einfach gefaltete Blechstütze 70 verdeckt wird, die gleichzeitig die hinterschnittene Einlaufhinterkante 71 berührt und so vorteilhaft der Eintrittsquerschnitteinstellung dient.

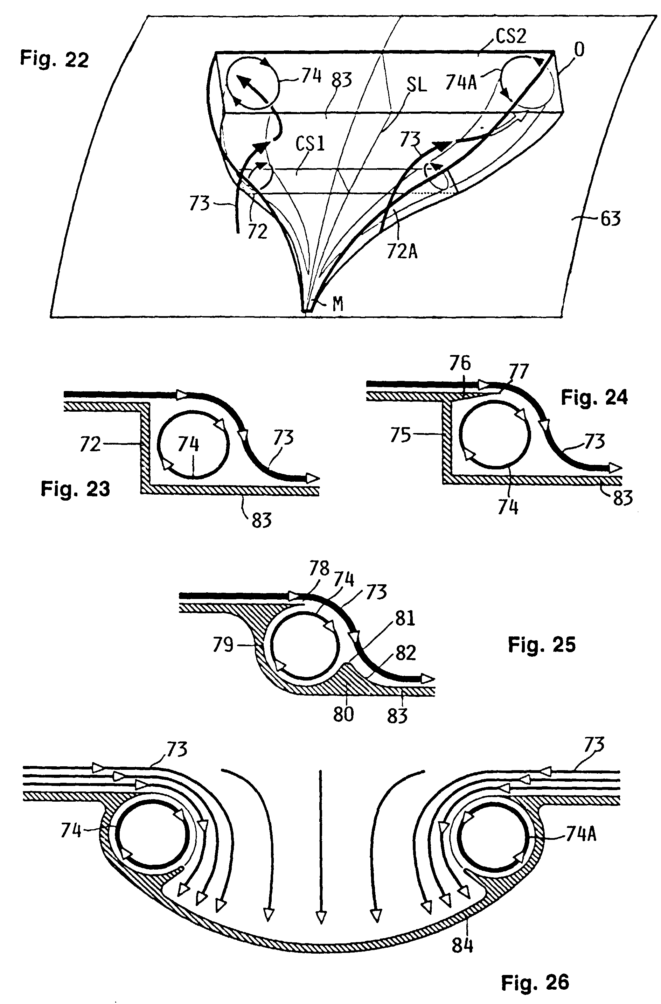

Im folgenden werden einige eingezogene aerodynamische Einläufe mit keilförmigen Einlaufbetten beschrieben, bei denen an den seitlichen Begrenzungen des Einlaufbettes ein symmetrisches Paar gegenläufig rotierender Stufenwirbel erzeugt wird, die die Einlaufströmung in mehrfacher Hinsicht günstig beeinflussen. Durch diese Beeinflussung der Einlaufströmung durch Stufenwirbel wird einmal eine über den Eintrittsquerschnitt weitgehend konstante flächenhafte Eintrittsgeschwindigkeitsverteilung erzielt. Diese füllige Geschwindigkeitsverteilung begünstigt den Hauptwirbelantrieb im Wirbelgehäuse und führt zu großen Volumenstromdurchsätzen durch eingezogene Einläufe relativ kleiner Baugröße. Zum anderen fördert diese Beeinflussung der Einlaufströmung durch Stufenwirbel die angestrebte günstige Vorauffächerung der Strömung im Einlaufbett und die anschließende axiale Auffächerung der Einlaufströmung im Wirbelgehäuse für den sekundärströmungsintegrierten Hauptwirbelantrieb. Fig. 22 zeigt einen eingezogenen Stufenwirbeleinlauf einfachster Bauart mit rechteckigen Querschnittsprofilen. Das Bild zeigt eine perspektivische Gesamtdarstellung des eingezogenen Stufenwirbeleinlaufes mit den symmetrischen Stufenwirbeln und der durch diese beeinflußten Einlaufströmung.

Fig. 23 zeigt die Strömungsvorgänge an einer entsprechenden Ecke mit seitlichen Einlaufbegrenzungen 72. Bei derartigen Stufenwirbeleinläufen findet immer ein wirbelbeeinflußtes Überströmen der stufenartig ausgebildeten Einlaufbegrenzungen 72 statt. Die wandnahe Einlaufströmung 73 wird durch den unmittelbar hinter der Stufe liegenden Stufenwirbel 74 strömungsgünstig an der Stufe hinunter und in das Einlaufbett hineingeführt.

Die Fig. 24 zeigt eine weitere Ausbildung einer entsprechenden Stufe, wobei die einfache rechtwinklige Stufe 75 durch eine tangential zur oberen Stufenwand verlaufende Abströmplatte 76 mit angeschärfter Abströmkante 77 ergänzt ist. Hierdurch wird der Stufenwirbel örtlich besser stabilisiert. Das Anschärfen dient der Vermeidung von Abströmkantenturbulenz. Jede in die Wirbelkammer eingeleitete Turbulenz würde sich trennleistungsmindernd auswirken.

In Fig. 25 ist anstelle eines eckigen Raumes unterhalb einer Abströmkante 78 ein halbkreisförmiges Stufenwirbelbett 79 angeordnet. Hierdurch werden Eckenströmungsverluste der Stufenwirbelführung vermieden, bei denen wiederum auch Turbulenz generiert würde. Das Bild zeigt schließlich die Ergänzung des Stufenwirbelbettes 79 durch eine strömungsgünstig geformte Anströmnase 80 mit einer Anströmkante 81, die gerundet bis scharf ausgebildet werden kann. Die Anströmnase wird so profiliert, daß sie einmal das teilkreisförmige Stufenwirbelbett 79 erweitert und zum anderen die durch den Stufenwirbel umgelenkte Einlaufströmung mit sanfter Eckenausrundung 82 in Richtung parallel zur Bodenfläche 83 umlenkt. Diese Ausgestaltung stellt daher die verlustärmste Variante einer Stufenwirbelführung dar.

Während die eingezogenen Stufenwirbeleinläufe mit ihren vorbeschriebenen Varianten sämtlich rechteckige bis rechteckähnliche Hauptströmungsquerschnitte mit einfach gekrümmten Bodenflächen 83 verwenden, die sich im Axialschnitt als Gerade darstellen, zeigt Fig. 26 eine Einlaufvariante, deren Bodenfläche 84 im Axialschnitt radial nach innen zur Wirbelkammerachse hin ausgebaucht ist, so daß diese Bodenfläche 84 insgesamt zweifach gekrümmt ist. Ausgebauchte Bodenflächen führen zu vorteilhaft größeren Einlaufströmungsquerschnitten mit dickeren Eintrittsstrahlen.

Nachfolgend wird eine Gruppe peripher um das Wirbelgehäuse umlaufender aerodynamischer Einläufe beschrieben, durch die die Wirbelströmung gleichmäßig über den gesamten Wirbelgehäuseumfang axialsymmetrisch mittig bis außermittig mit günstiger integraler Sekundärströmungsanpassung angetrieben wird. Diese Art des kontinuierlich umlaufenden Wirbelantriebs wirkt sich vorteilhaft auf die Rotationssymmetrie der angetriebenen Wirbeltrennströmung aus.

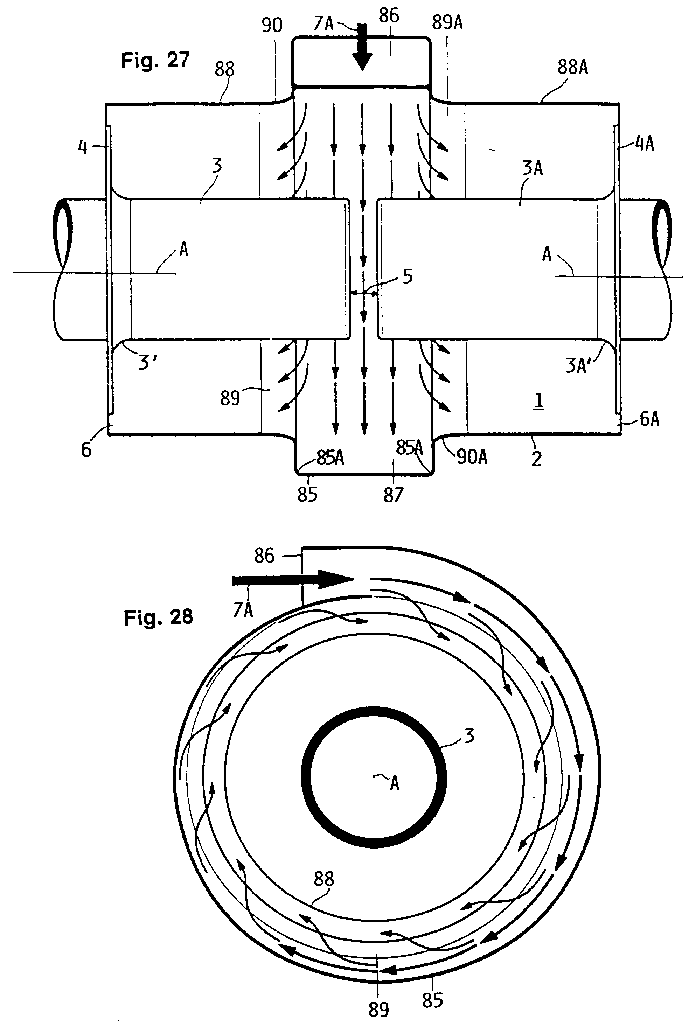

Die Fign. 27 und 28 zeigen einen umlaufenden aerodynamischen Einlauf einfachster Bauart mit Varianten. Fig. 27 zeigt den Einlauf in axialer und Fig. 28 in radialer Darstellung. Danach besteht der Einlauf aus einem umlaufenden Spiralgehäuse 85 mit Strömungseintritt 86 für den Rohgasstrom 7A. Das Spiralgehäuse 85 weist rechteckige Strömungsquerschnitte auf, deren Ecken auch vorteilhaft gerundet sein können. Die rechteckigen Strömungsquerschnitte 87 sind nach radial innen zum Wirbel im Wirbelgehäuse 88 offen mit freier Strömungsgrenze. Radial zwischen dem umlaufenden Spiralgehäuse 85 und dem Wirbelgehäuse 88 ist eine rotationssymmetrische Verteilungskammer 89 angeordnet, die günstig profilierte gekrümmte Seitenwandbegrenzungen 90 aufweist, über die die Einlaufströmung rotations- und axialsymmetrisch etwa deckungsgleich mit der örtlichen natürlichen Sekundärströmung vorteilhaft integral in diese übergeht. Die freie Strömungsgrenze zwischen Spiralgehäuse 85 mit Verteilungskammer 89 und Wirbelgehäuse 88 bildet zusätzlich eine vorteilhaft große Antriebsfläche für den Wirbel mit Übertragung von Drehimpuls. Das umlaufende Spiralgehäuse kann auch umfangsmäßig in vorteilhaft gleiche Teilspiralgehäuse mit jeweils zugehörigen eigenen Strömungseintritten unterteilt sein.

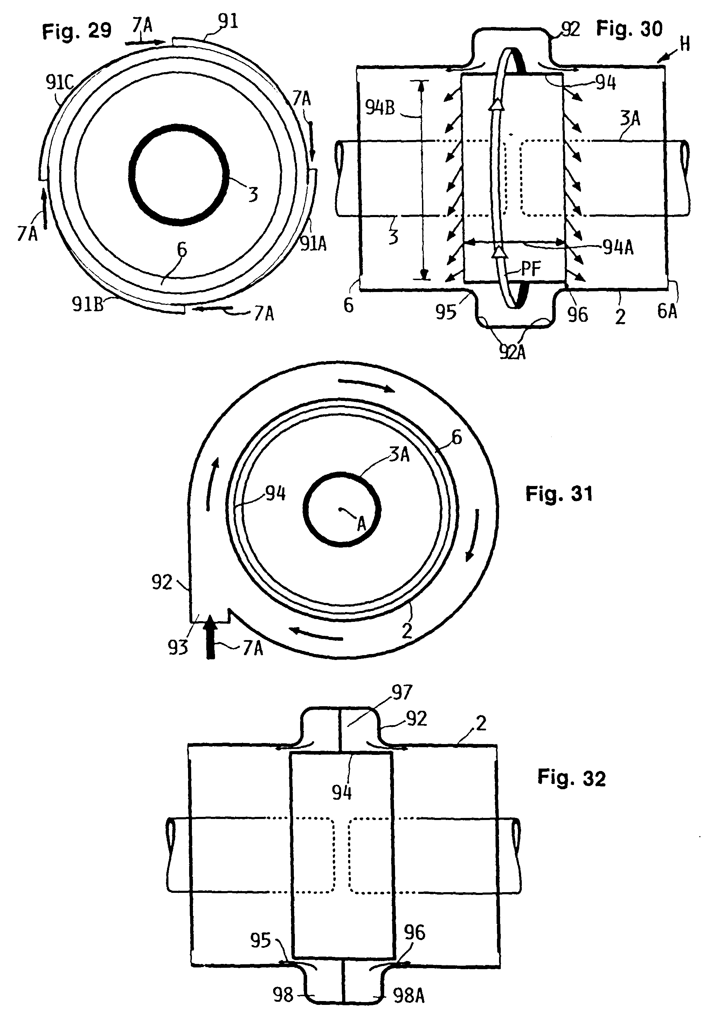

Fig. 29 zeigt eine rotationssymmetrische Verteilungskkammer 89 mit einer Vierfachanordnung gleicher Teilspiralgehäuse 91.

Die Fign. 30 und 31 zeigen einen Einlauf mit einem rotationssymmetrischen Ringgehäuse 92 im Axial- bzw. Radialschnitt mit dem einfachen tangentialen Strömungseintritt 93 zum Ringgehäuse 92. Das Ringgehäuse 92 weist strömungsgünstige Eckenausrundungen auf und ist nach radial innen durch einen axial breiteren Zylindermantel 94 kleineren Durchmessers als beim Wirbelgehäusezylindermantel so abgedeckt, daß dadurch paarige symmetrische ringförmige Düsen 95 entstehen mit ringförmigen Austrittspalten 96 zur Erzeugung eines axialsymmetrischen Strömungsaustritts in die Wandschichtströmung der natürlichen Sekundärströmung im Wirbelgehäuse. Der tangentiale Strömungseintritt 93 besorgt die erforderliche Dralleinleitung in das Ringgehäuse 92, aus dessen beiden symmetrischen ringförmigen Austrittsspalten 6,6A die Einlaufströmung dann mit axialsymmetrischen und Umfangsgeschwindigkeitskomponenten austritt, deckungsgleich günstig angepaßt an die natürliche Sekundärströmung und diese antreibend.

Fig. 32 zeigt eine entsprechende Anordnung, die eine ringförmigen Stützplatte 97 in der axialen Mittelebene der Wirbelkammer aufweist, wodurch der Zylindermantel 94 abgestützt und die Einlaufströmung in zwei symmetrische Hälften aufgeteilt wird. Die dadurch entstehenden zusammenhängenden symmetrischen Teilgehäuse 98 können auch als zwei symmetrische Einzelgehäuse 99 ausgebildet werden, die axial weiter auseinander liegen.

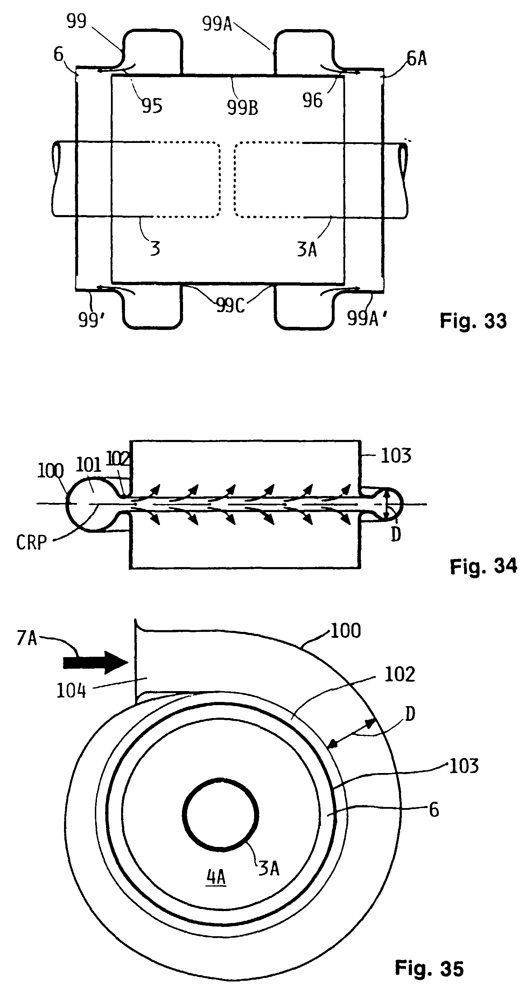

In Fig. 33 ist eine Anordnung gezeigt, wobei zwei derartige Antriebstellen für den Trennwirbel vorgesehen sind, die vorteilhaft an dafür geeigneten Orten positioniert werden können.

In den Fign. 34 und 35 ist im Axial- und Radialschnitt ein Einlauf mit einem umlaufenden Spiralgehäuse 100 mit Kreisquerschnitten 101 dargestellt. Das Spiralgehäuse 100 ist an seiner radialen Innenseite kreisförmig begrenzt und geht dort über den gesamten Kreisumfang in ein axial schmaleres rotationssymmetrisches Ringgehäuse über, das vorteilhaft als Strömungsausgleichgehäuse 102 wirkt und in das die Einlaufströmung aus dem Spiralgehäuse 100 rotationssymmetrisch über den gesamten Umfang mit gleichen radialen und Umfangsgeschwindigkeitskomponenten eintritt. Die Übergänge zwischen Spiralgehäuse 100 und Strömungsausgleichgehäuse 102 sind strömungsgünstig gerundet, ebenso die rotationsymmetrischen Übergänge zwischen Strömungsausgleichgehäuse 102 und dem hier kreiszylindrischen Wirbelgehäuse 103. Der tangentiale Strömungseintritt 104 leitet den erforderlichen Drall ein und erzeugt so die Umfangsgeschwindigkeitskomponenten in der Einlaufströmung im Spiralgehäuse 100, während die spiraligen Wandbegrenzungen des Spiralgehäuses 100 die Radialgeschwindigkeitskomponenten erzeugen. Diese Radialgeschwindigkeitskomponenten setzen sich im Strömungsausgleichgehäuse 102 fort bis in dessen Übergangsbereich in das Wirbelgehäuse, denn bis dort erstreckt sich die Führungswirkung des Strömungsausgleichgehäuses 102 mit ihrem Kontinuitätseinfluß auf die Radialgeschwindigkeitskomponenten. Dieser radiale Kontinuitätseinfluß nimmt bis zum Ende des gerundet profilierten Übergangsbereiches zwischen Strömungsausgleich- und Wirbelgehäuse bis auf Null (0) ab. Auf diesem Weg wandelt sich die radial orientierte Meridianströmung aus dem Strömungsausgleichgehäuse 102 immer mehr in eine axial orientierte Meridianströmung um, wobei sich die Umfangsgeschwindigkeitskomponenten wegen der abnehmenden Radien bis dahin noch vorteilhaft steigern. Da sich das Wirbelgehäuse nach zwei Seiten axialsymmetrisch vom mittigen Strömungsausgleichgehäuse aus erstreckt, erfolgt die radial-axiale Umwandlung mit Strömungsteilung der Meridianströmung in zwei axialsymmetrisch gleiche Teilvolumenströme. So erfolgt die rotations- und axialsymmetrische Strömungsanpassung der Einlaufströmung deckungsgleich zur örtlichen natürlichen Sekundärströmung und mit vorteilhaft integraler Antriebswirkung auf den Trennwirbel.

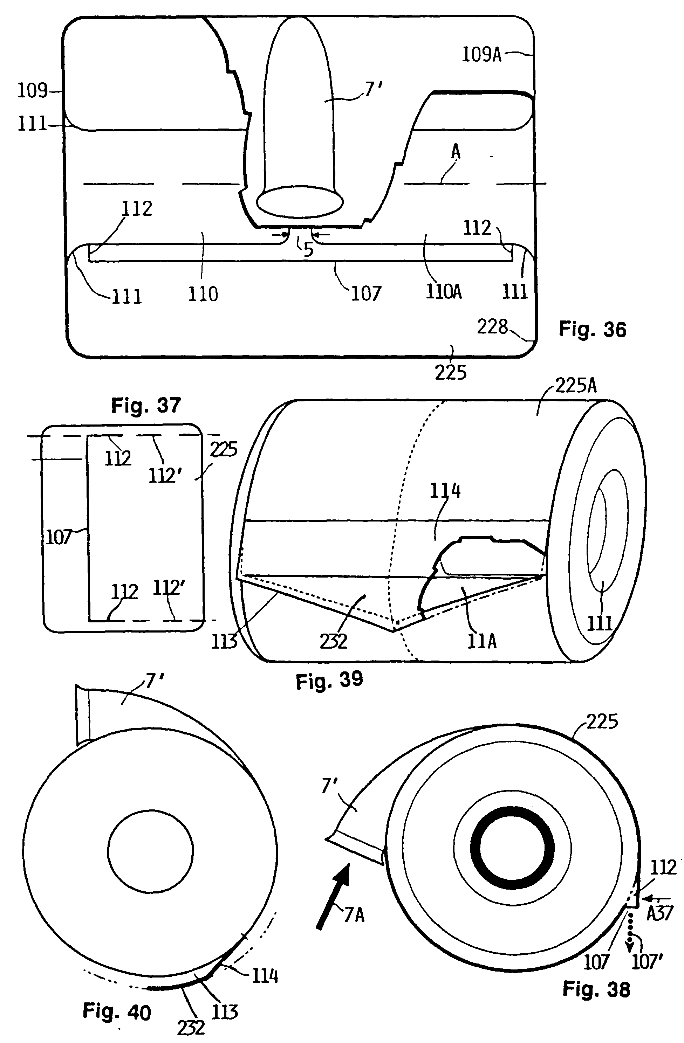

Fig. 36 zeigt eine Wirbelkammer mit einem geraden parallel zur Wirbelkammerachse verlaufenden Schälschlitz 107 in axialer aufgebrochener Geamtdarstellung. Mit dem hier kreiszylindrisch gewählten Wirbelgehäusemantel sind die beiden Wirbelkammerböden 109,109A und mit letzteren die Tauchrohre 110,110A in vorteilhaft integraler Bauweise durch strömungsgünstige Ausrundungen 111 an sämtlichen Strömungsecken für die Sekundärströmung verbunden.

Fig. 37 zeigt diese Wirbelkammer mit geradem Schälschlitz in axialer Rückansicht von außen und Fig. 38 in radialer Ansicht. Der Schälschlitz 107 ist vorteilhaft einfach nur im zylindrischen Bereich des Wirbelgehäusemantels zwischen den Bodeneckenausrundungen als mit dem Kreiszylindermantel integriertes Bauteil tangential zum Zylinderumfangskreis nach außen herausgebogen. Dabei entstehen zwei axial seitliche Schlitze, die hier durch keilförmige Schälschlitzseitenwände 112 abgedeckt sind.

In Fig. 39 ist eine Abwandlung dieser Wirbelkammer mit einem V-förmigen Schälschlitz 113 in perspektivischer Gesamtdarstellung und in Fig. 40 in rückseitiger Axialansicht dargestellt. Der V-förmige Schälschlitz kann auch als Kurve ausgebildet werden und bietet neben fertigungstechnischen Vorteilen eine trennströmungsgünstige Anpassungsmöglichkeit an die axialsymmetrische Sekundärströmung am Zylindermantel des Wirbelgehäuses. Nach der Radialansicht ist der V-förmige Schälschlitz 113 vorteilhaft einfach ohne axiale Schälschlitzseitenwände ausgebildet. Die Wirbelkammer kann auch mit Schälschlitzseitenwänden ausgestaltet werden. Bei der Integration zu Multiwirbelkammeranordnungen mit Lochplatten werden die seitlichen Schlitze in einfacher Weise durch die Lochplatten abgedeckt, wobei die seitlichen Schenkel 112 vorteilhaft einfach für die axiale und radiale Arretierung der Wirbelkammer in den hier nicht dargestellten Lochplatten genutzt werden. Nach Fig. 40 wird der Schälschlitz im stromaufwärtigen Bereich vorteilhaft als mit dem zylindrischen Wirbelgehäusemantel integral zusammenhängendes Bauteil tangential aus dem Wirbelgehäusemantel herausgebogen, und zwar so weit, bis die erforderliche Schälschlitzbreite erreicht wird, wie es der Verlauf der seitlichen Schenkel 112 anzeigt. Ab dieser Stelle wird der V-förmige Bereich 115 des Schälschlitzbleches konzentrisch zur Wirbelkammerachse gekrümmt, so daß im V-förmigen Bereich ein Schälschlitz konstanter Schälschlitzbreite entsteht.

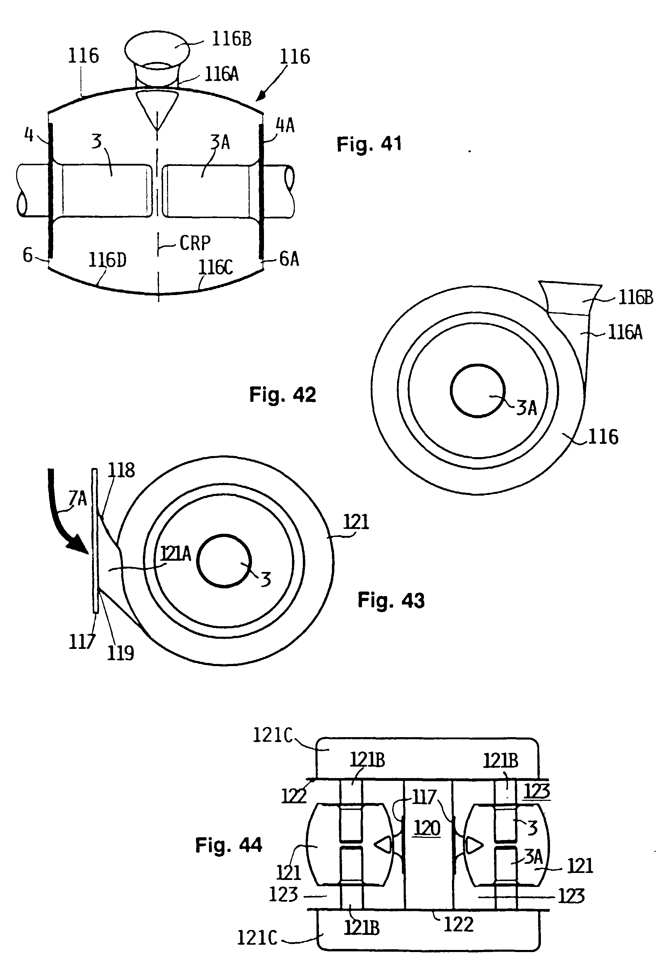

In Fig. 41 ist eine Wirbelkammer im Axialschnitt mit einem tonnenförmigen Wirbelgehäusemantel 116 dargestellt, der hier beispielsweise mit einem Einlauf als einfacher Rohreinlauf ausgestaltet ist. Dabei zeigt Fig. 42 die Wirbelkammer in radialer äußerer Gesamtansicht. Eine tonnen- bis doppelkegelförmige Mantelausbildung bewirkt eine größere Eintrittsstrahlreichweite in Umfangsrichtung und damit eine verbesserte Tangentialimpulsumwandlung zum Antrieb des Wirbels, weil die Strahlauffächerung über einen größeren Umfangsbereich erfolgt. Hieraus resultiert eine weitere Steigerung der Trennleistung. Die Wirbelkammer ist hier mit axialen zweiseitigen Austragsspalten 6,6A ausgestaltet. Sie kann aber auch mit Schälschlitzen oder mit Kombinationen von Schälschlitzen und axialen Austragsspalten 6,6A ausgestaltet werden.

In Fig. 43 ist eine Abwandlung einer tonnenförmigen Wirbelkammer mit einem Rohreinlauf in radialer Ansicht dargestellt, bei der der Rohreinlauf zum seitlichen Anschluß der Wirbelkammer an einen Verteilungskanal mit einem Flansch 117 versehen ist. Der Flansch geht mit strömungsgünstigen Eckenausrundungen 118 für verlustarme Strömungseinleitung in den Rohreinlauf über. Im Bereich der Anströmecken 119 geht der Flansch mit vorteilhaft geringeren Ausrundungen in den Rohreinlauf über, weil dieser Bereich als verlustarmer Strömungsteilungsbereich auszubilden ist. Mit derart über den inneren Flanschumfang variierenden strömungsgünstigen Eckenausrundungen wird eine turbulenzarme Strömungsverteilung aus dem Verteilungskanal sichergestellt und somit die Trennleistung der angeschlossenen Wirbelkammern nicht beeinträchtigt. Für Multiwirbelkammeranlagen ist es aus Gründen rationeller Serienfertigung und der Anlagenmontage im Anlagenaufbau vorteilhaft, gleichartige Wirbelkammern in Gruppen mit gleicher Wirbelkammeranzahl zu gleichausgestalteten Modulen zusammenzufassen.

Fig. 44 zeigt in Draufsicht ein Wirbelkammermodul, bestehend aus tonnenförmigen Wirbelkammern mit axialen zweiseitigen Austragsspalten. An einen Verteilungskanal 120 für Rohgas sind zweiseitig symmetrisch strömungsmäßig parallel und statisch tragend mehrere Wirbelkammern 121 angeschlossen. Der Verteilungskanal 120 trägt die angeflanschten Wirbelgehäuse der Wirbelkammergruppe und ist hier mit rechteckigem Strömungsquerschnitt so ausgebildet, daß er als statische Hauptstütze des Wirbelkammermoduls dient. Daher erstreckt sich der Verteilungskanal in Axialrichtung der Wirbelkammern 121 soweit, daß die beiden gleichen rechteckigen Reingassammelkanäle 121C des Moduls vorteilhaft statisch mit dem tragenden Verteilungskanal 120 verbunden werden können und zwar so, daß zwischen den beiden Wirbelkammerböden und den Grundplatten 122 der Reingassammelkanäle 212 zwei axialsymmetrische Staubtransporträume 123 freigelassen werden. Die beiden Grundplatten 122 tragen jeweils alle Tauchrohre 121B mit den damit verbundenen Wirbelkammerböden einer axialen Wirbelkammerseite. Die Grundplatten werden wiederum als statische Tragelemente so ausgebildet und gegenüber den langen Querschnittsseiten der Reingassammelkanäle so verlängert, daß sie als flanschartige Verbindungselemente zwischen mehreren Wirbelkammermodulen genutzt werden können. Die Wirbelkammerbaugruppen Wirbelgehäuse mit Einlauf und in zweifacher Ausführung Tauchrohr mit Wirbelkammerboden werden also vorteilhaft kraftschlüssig über den statischen Weg Verteilungskanal-Reingassammelkanäle im Wirbelkammermodul verbunden. Dadurch, daß diese statischen Verbindungselemente kastenförmig sind mit relativ größeren tragenden Querschnitten, wird eine hohe Modulsteifigkeit mit einem niedrigen Baugewicht erzielt.

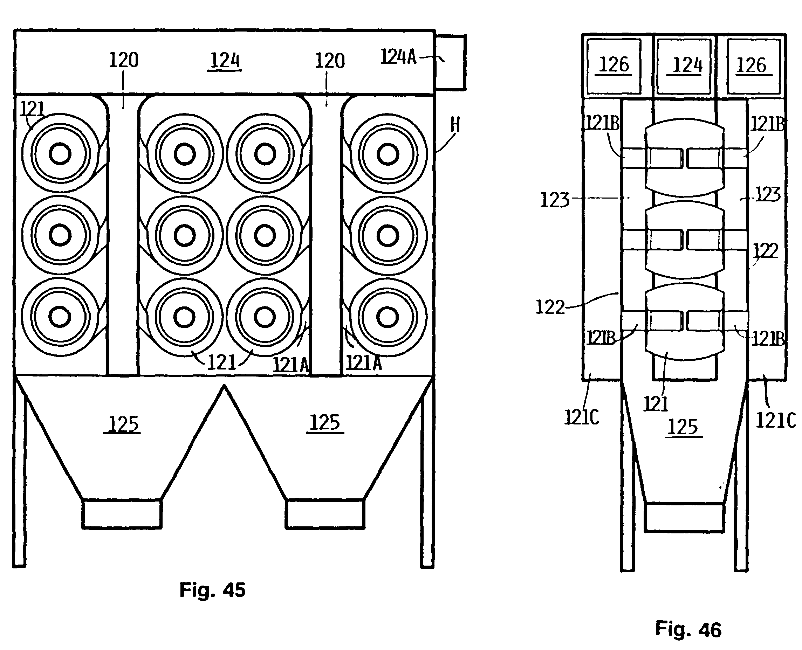

Fig. 45 zeigt die Seitenansicht eines Wirbelkammermoduls nach Fig. 44 in Parallelschaltung von 2 Modulen in einer Wirbelkammeranlage. Ein Wirbelkammermodul besteht hier aus einer Gruppe von insgesamt 6 Wirbelkammern, die raumsparend zweiseitig symmetrisch in 3 Etagen traubenartig an die senkrechten Verteilungskanäle 120 angeschlossen sind. Die Verteilungskanäle 120 sind in strömungsmäßiger Parallelschaltung an den horizontalen Rohgashauptkanal 124 angeschlossen, der oberhalb der Wirbelkammermodule angeordnet ist, um unter diesen ausreichenden freien Raum für den Transport des aus den Wirbelkammern 121 abgeschiedenen Staubes in die Staubauffangtrichter 125 bereitzustellen. Zur Verringerung der Anlagenbauhöhe ist es vorteilhaft, mehrere Staubauffangtrichter 125 nebeneinander anzuordnen.

Fig. 46 zeigt die Frontansicht dieser Wirbelkammeranlage mit den oben platzsparend zweiseitig neben dem Rohgashauptkanal 124 angeordneten beiden Reingashauptkanälen 126, die wiederum in horizontaler Anordnung die einzelnen senkrechten Reingassammelkanäle 121 jeweils von einer Wirbelkammermodulseite in strömungsmäßiger Parallelschaltung miteinander verbinden. Weiterhin sind die beiden Staubtransporträume 123 seitlich der Wirbelkammern 121 dargestellt, die unten in die Staubauffangtrichter 125 münden.

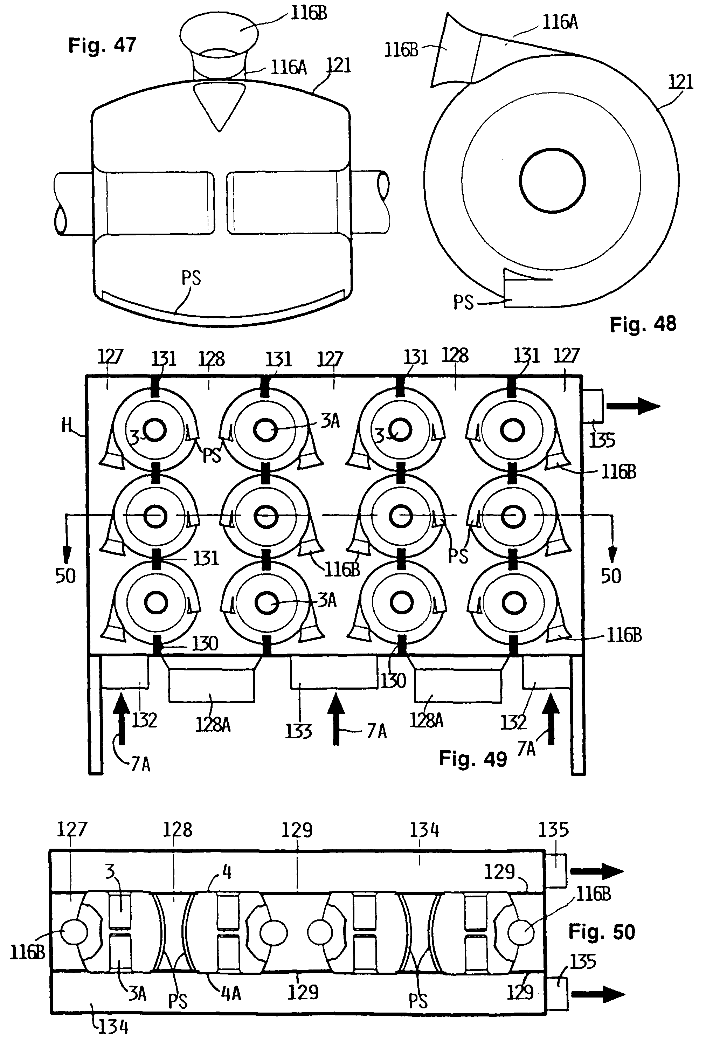

In Fig. 47 ist eine tonnenförmige Wirbelkammer 121 mit Schälschlitz PS gezeigt, der sich in der seitlichen Projektion als Gerade darstellt, wie dies die Radialansicht nach Fig. 48 andeutet. Dies bringt fertigungstechnische Vorteile. Die tonnenförmige Wirbelkammer ist hier mit einem Einlauf als einfachem geraden Rohreinlauf 116V mit Aufsatzdüse 116B für freies gleichverteiltes beschleunigtes Ansaugen aus Beruhigungskammern in Multiwirbelkammeranlagen ausgestaltet. Die Ausgestaltung der Wirbelkammern mit Schälschlitzen führt zu einem einfachen und raumsparenden Aufbau von Multiwirbelkammeranlagen.

Fig. 49 zeigt eine solche Multiwirbelkammeranlage in seitlicher Hauptansicht und Fig. 50 in Schnittdarstellung mit Sicht von unten. Bei diesem Wirbelkammertyp mit Schälschlitz gilt hier die Einzelwirbelkammer als Modul. Weil Schälschlitze und Einläufe einfach im Wirbelgehäusemantel gegenüberliegend angeordnet sind, liegen die Rohgasverteilungsräume 127 als Beruhigungskammern und die Staubtransporträume 245 in der Multiwirbelkammeranlage einfach zwischen zwei Lochplatten 129 abwechselnd nebeneinander. Die gasdichte Trennung von Rohgasverteilungsräumen 127 und Staubtransporträumen 128 erfolgt einfach durch Serientrennelemente 130 und 131 zwischen den senkrecht angeordneten Gruppen von Wirbelkammern. Insgesamt führt dies zu einem einfacheren Anlagenaufbau und zu kleineren Anlagenbaugrößen. Die Rohgaszufuhr erfolgt hier von unten platzsparend zwischen den nicht gezeigten Staubsammelbehältern in separaten Rohgaseintritten 132 und 133 zu den einzelnen Rohgasverteilungsräumen 127. Das Reingas aus den einzelnen Wirbelkammern wird in zwei seitlichen axialsymmetrisch zu den Wirbelkammern angeordneten größeren Reingassammelräumen 134 als Beruhigungskammern gesammelt und durch zwei Reingasaustritte 135 abgeführt.

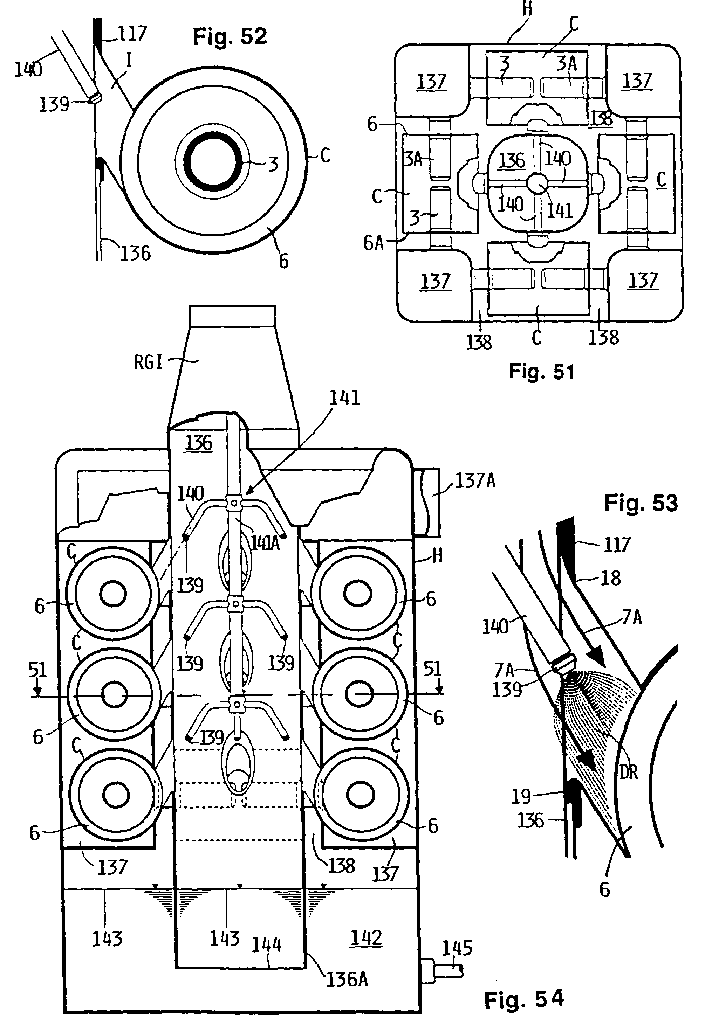

In Fig. 51 ist in Draufsicht gezeigt, daß sich kreuzartige Wirbelkammermodule auch mit Wirbelkammern C mit axialen zweiseitigen Austragsspalten 6,6A gestalten lassen. Die Wirbelkammern sind hier über Einläufe als einfache gerade Rohreinläufe mit strömungsgünstigen Eintrittausrundungen an einen zentralen Rohgaskanal 136 im Kreuzungszentrum der Wirbelkammeranordnung angeflanscht, wie dies Fig. 52 für die Radialansicht einer Wirbelkammer C im Detail zeigt. Nach Fig. 51 sind die vier Reingassammelkanäle 137 in den Kreuzecken so angeordnet, daß zwischen den seitlichen Wirbelkammerböden mit den axialen Austragsspalten 6,6A Zwischenräume als Staubtransporträume 138 freigelassen werden. Mit dieser kreuzartigen Wirbelkammeranordnung ergibt sich wiederum eine raumsparende Modulkonstruktion.

Die Wirbelkammer C nach Fig. 52 ist zusätzlich mit einer Einspritzdüse 139 an einer Einspritzrohrleitung 140 zum Zerstäuben von Flüssigkeit ausgerüstet. Die Zerstäubung von Flüssigkeiten beispielsweise als Wassertropfen erfolgt im Einlauf der Wirbelkammer. Damit wird eine naßabscheidende Wirbelkammer geschaffen, die gegenüber der Trockenabscheidung von Staub zu noch höheren Trennleistungen führt. Die Trennleistungssteigerung basiert dabei auf dem physikalischen Effekt, daß sich Staubpartikeln durch Partikelstöße mit den Flüssigkeitströpfchen vereinigen und dadurch schwerere Partikeln entstehen, die sich mit weniger Drehströmungsenergie leichter abtrennen lassen.

Grundsätzlich lassen sich sämtliche Wirbelkammertypen mit unterschiedlichen Einläufen mit Einspritzeinrichtungen zur Flüssigkeitszerstäubung ausrüsten. Die Zerstäubung kann bei Einzelwirbelkammern, in Wirbelkammermodulen für Multiwirbelkammeranlagen und in anderen Multiwirbelkammersystemen außer in den separaten Einläufen auch stromaufwärts von diesen in Verteilungsgehäusen wie Beruhigungskammern und anderen Rohrleitungen und Rohrleitungssystemen erfolgen. Die Einspritzdüsen können die Zerstäubungsflüssigkeit dabei kegelartig in Gasströmungsrichtung aussprühen oder auch im Gegenstrom entgegen der örtlichen Gasströmungsrichtung. Es können dabei weiterhin eine oder auch mehrere strömungsmäßig parallel geschaltete Einspritzdüsen in Gasströmungsquerschnitten angeordnet werden, die von entsprechenden Rohrleitungen oder Verteilungsrohrleitungssystemen zentral gespeist werden.

Fig. 53 zeigt eine vergrößerte radiale Detaildarstellung eines Einlaufes mit der Einspritzdüse und der Einspritzrohrleitung der Naßwirbelkammer nach Fig. 52. Die Flüssigkeit wird hier in Richtung der Einlaufströmung kegelartig zerstäubt. Dabei werden die Flüssigkeitspartikelbahnen durch die Schleppkräfte aus der seitlichen Gasumströmung gekrümmt. Die Einspritzdüse ist so angeordnet, daß der gesamte Eintrittsquerschnitt des Einlaufes durch die Sprühströmung erfaßt wird.

Fig. 54 zeigt eine Naßwirbelkammeranlage, hier gebildet aus einem einzigen kreuzartigen Wirbelkammermodul mit Wirbelkammern C mit axialen zweiseitigen Austragsspalten 6,6A nach Fig. 51. Diese Naßwirbelkammeranlage besteht aus drei Wirbelkammeretagen mit insgesamt 12 Wirbelkammern und oben liegendem Rohgaseintritt sowie ringförmigem Reingassammelkanal mit Reingasaustritt. Im zentralen Rohgasverteilungskanal 136 im Kreuzungszentrum der Wirbelkammeranordnung ist konzentrisch das hier vierfach achsensymmetrische und dreietagige Verteilungsrohrleitungssystem 141 mit den Einspritzdüsen 139 angeordnet. Die als Staubsuspension abgeschiedene Flüssigkeit sammelt sich in einem Auffangbehälter 142 unterhalb der Wirbelkammern. Der zentrale Rohgaskanal 136 für Rohgas ist nach unten in einen Auffangbehälter 142 hinein verlängert bis unterhalb des Flüssigkeitsspiegels 143 und kann daher unten mit einer Öffnung 144 bis über den gesamten Rohrquerschnitt zum Auffangbehälter 142 offen belassen werden, weil die Gasabdichtung durch die Wirkung kommunizierender Gefäße erfolgt. Die Öffnung 144 bringt den Vorteil, daß Suspensionstropfen, die im oberen Rohgaskanal aufgrund ihres Gewichtes nicht in die Einläufe der Wirbelkammern umgelenkt wurden, nach unten in die Flüssigkeit des Auffangbehälters 142 sedimentieren. Die auf die gleiche Weise dahin gelangten Staubpartikeln können dann in der Flüssigkeit des Auffangbehälters 142 innerhalb des darin befindlichen nach unten offenen Rohgaskanals 136 weiter sedimentieren bis in Bodennähe des Auffangbehälters 142 und dann mit der gemeinsamen Flüssigkeit als Suspension über den Flüssigkeitsaustritt 145 abgepumpt werden. Auf diese Weise wirkt der unten offene Rohgaskanal 136 als integrierter Vorabscheider bei einem einzigen gemeinsamen Auffangbehälter für Suspensionsflüssigkeit. Der Reingasauslaß ist mit 137A bezeichnet.

Die dargestellten und beschriebenen Einrichtungen können anstelle der Ringspalte auch Schälschlitze zum Austragen der Partikeln aufweisen. Ferner ist es denkbar, daß die erfindungsgemäßen Einläufe mit solchen Wirbelkammern kombiniert werden, wobei ein Restrohgaskanal vorgesehen ist.

## Patentansprüche

1. Verfahren zum Trennen und/oder Abscheiden von festen und/oder flüssigen Partikeln aus gasförmigen und/oder flüssigen Medien sowie zum Trennen von gemischten Gasen und/oder gemischten Flüssigkeiten sowie zum Sichten und/oder Klassieren mit einem Wirbelkammerabscheider mit annähernd koaxial und spiegelbildlich in die Wirbelkammer (1) hineinragenden Tauchrohren (3,3A), wobei der zu trennende Medienstrom tangential in mindestens einem Eintrittsstrahl mit einem Einlaufströmungsfeld (7B) in den axialen Zentralbereich der Wirbelkammer eingeleitet wird, wodurch eine wandnahe Mantelschichtströmung (11) entsteht, mit einem Querschnitt des Eintrittsstrahls, dessen parallel zur Wirbelkammerachse verlaufende Erstreckung sich nur über einen Teil der Wirbelkammerlänge erstreckt, wobei der Querschnitt des Eintrittsstrahls eine eher gedrungene Form aufweist und ein von schwereren Partikeln gereinigter Strom durch die Tauchrohre (3,3A) aus der Wirbelkammer austritt und die abgetrennten Partikeln durch mindestens einen Schälschlitz (107,113) und/oder durch Ringspalte (6,6A) und/oder mittels eines Restrohgasstromes abgeführt werden,
**dadurch gekennzeichnet**, daß das Einlaufströmungsfeld (7B) bereits vor dem Zusammentreffen mit der Mantelschichtströmung (11) eine Aufspreizung zur Anpassung an die Mantelschichtströmung (11) aufweist.

2. Verfahren nach Anspruch 1,
dadurch gekennzeichnet, daß stromaufwärts der Wirbelkammer eine Flüssigkeit eingespritzt wird.

3. Einrichtung zur Durchführung des Verfahrens nach Anspruch 1 zum Trennen der spezifisch leichteren und schwereren Anteile aus einem Strom eines mit suspendierten Stoffen beladenen Mediums mittels Fliehkräften, mit einer Führung zur Umlenkung des Stromes in eine Wirbelkammer (1) mit einer Längsachse (A) mit mindestens einem Strömungseinlauf mit einem Einlaufquerschnitt, dessen parallel zur Wirbelkammerachse verlaufende Erstreckung sich nur über einen Teil der Wirbelkammerlänge erstreckt, wobei die Wirbelkammer zwei koaxial und spiegelbildlich zu deren Mittelebene in deren Zentralbereich hineinragende Tauchrohre (3,3A) zum Absaugen des leichteren Anteils aufweist, und das Gehäuse der Wirbelkammer aus einem umlaufenden Mantel mit an den axialen Enden angeordneten Wirbelkammerböden besteht, in welche die Tauchrohre eingesetzt sind. wobei die Wirbelkammer zum Austragen des spezifisch schwereren Anteils Ringspalte (6,6A) und/oder Schälschlitze und/oder einen Restrohgaskanal aufweist, wobei die Ringspalte zwischen dem äußeren Rand der Wirbelkammerböden (4,4A) und dem Mantel bestehen und die Schälschlitze (107,113) innerhalb des Wirbelkammermantels angeordnet sind und der Mantel eine geschlossene rotationssymmetrische Grundform aufweist,
**dadurch gekennzeichnet**, daß der Einlauf (7) so ausgebildet ist, daß er eine an die Mantelschichtströmung (11) angepaßte Aufspreizung des Einlaufströmungsfeldes (7B) ermöglicht.

4. Einrichtung nach Anspruch 3,
**dadurch gekennzeichnet**, daß im Bereich des Einlaufs (7) mindestens ein Strömungsführungsbett (10) angeordnet ist.

5. Einrichtung nach Anspruch 3,
**dadurch gekennzeichnet**, daß der Einlauf einen im wesentlichen rechteckigen bis ovalen Strömungsquerschnitt aufweist, der ein Strömungsführungsbett (10) bildet.

6. Einrichtung nach Anspruch 3,
**dadurch gekennzeichnet**, daß der Einlauf als Rohreinlauf (13A,13B,13C) mit einem beliebigen Querschnitt ausgebildet ist.

7. Einrichtung nach Anspruch 3,
**dadurch gekennzeichnet**, daß der Einlauf (23) eine angepaßte Form aufweist.

8. Einrichtung nach Anspruch 3,
**dadurch gekennzeichnet**, daß der Rohreinlauf als gerade Einlaufführungsstrecke (24) ausgebildet ist.

9. Einrichtung nach Anspruch 3,
**dadurch gekennzeichnet**, daß der Einlauf (29) eine eingezogene Form aufweist.

10. Einrichtung nach Anspruch 9,
**dadurch gekennzeichnet**, daß der eingezogene Einlauf aus einem Profil mit offenem Querschnitt wie aus einem U-Profil (47) gebildet ist.

11. Einrichtung nach Anspruch 9,
**dadurch gekennzeichnet**, daß der eingezogene Einlauf im wesentlichen aus einer Zunge (57) mit einer Zungenhinterkanke (61) und einer Einlaufhinterkante (62,71) besteht.

12. Einrichtung nach Anspruch 9,
dadurch gekennzeichnet, daß der eingezogene Einlauf mit einer Zunge (57A) eine Spaltstütze (64) aufweist.

13. Einrichtung nach Anspruch 9,
**dadurch gekennzeichnet**, daß der eingezogene Einlauf dadurch gebildet ist daß in der Mittelebene der Wirbelkammer (1) ein schmaler Einschnitt (65) bis zur Zungenhinterkante (68) angebracht wird und die so entstandenen Zungenhälften (67,67A) um keilförmig verlaufende Einlaufbegrenzungen (66,66A) eingeklappt sind, wobei zwischen den Zungenhälften (67,67A) ein Spalt (69) entstanden ist.

14. Einrichtung nach Anspruch 13,
**dadurch gekennzeichnet**, daß der Spalt (69) durch eine die Einlaufhinterkante (71) berührende gefaltete Blechstütze (70) verschlossen ist.

15. Einrichtung nach Anspruch 3,
**dadurch gekennzeichnet**, daß die Wirbelkammer (1) ein rotationssymmetrisches Außengehäuse und eine Vielfachanordnung von eingezogenen Einläufen aufweist.

16. Einrichtung nach Anspruch 3,
**dadurch gekennzeichnet**, daß das Wirbelkammergehäuse ein symmetrisch zur Mittelebene angeordnetes Ringgehäuse (92) und einen hierzu symmetrischen inneren Zylindermantel (94) aufweist, wodurch paarige symmetrische ringförmige Düsen (95) gebildet werden.

17. Einrichtung nach Anspruch 3,
**dadurch gekennzeichnet**, daß die Wirbelkammer zwei symmetrische Einlaufgehäuse (99,99A) aufweist.

18. Einrichtung nach Anspruch 3,
**dadurch gekennzeichnet**, daß die Wirbelkammer ein umlaufendes Spiralgehäuse (100) von beliebigem Querschnitt aufweist.

19. Einrichtung nach einem der Ansprüche 3 bis 18,
**dadurch gekennzeichnet**, daß der Wirbelgehäusemantel (116) tonnenförmig oder doppelkegelförmig bzw. doppelkegelförmig mit einem zylindrischen Mittelteil ausgebildet ist.

20. Einrichtung nach einem der Ansprüche 3 bis 19,
**dadurch gekennzeichnet**, daß der Einlauf mit einem Flansch (117) versehen ist.

21. Einrichtung nach einem der Ansprüche 3 bis 19,
**dadurch gekennzeichnet**, daß das Wirbelkammergehäuse (H) mehrere Einläufe aufweist.

22. Einrichtung nach einem der Ansprüche 7 bis 19,
**dadurch gekennzeichnet**, daß der Einlauf eine Einlaufdüse (116B) als Beschleunigungsstrecke aufweist.

23. Einrichtung nach einem der Ansprüche 3 bis 22,
**dadurch gekennzeichnet**, daß diese mindestens eine Einspritzdüse (139) aufweist.

24. Einrichtung nach einem der Ansprüche 3 bis 23,
**dadurch gekennzeichnet**, daß eine oder mehrere Einspritzdüsen (139) in einem oder mehreren Verteilerkanälen stromaufwärts von der Einrichtung angeordnet sind.

## Claims

1. Method for separating and/or eliminating solid and/or liquid particles from gaseous and/or liquid media, as well as for separating mixed gases and/or mixed liquids, as well as for sifting and/or classifying with a centrifugal separator having dip pipes (3, 3A) projecting approximately coaxially and homologously into the centrifugal chamber (1), the medium flow to be separated being introduced tangentially in at least one intake jet with an inlet flow field (7B) into the axial central area of the centrifugal chamber, so that a wall-near jacket layer flow (11) is formed, with a cross-section of the intake jet, whose extension parallel to the centrifugal chamber axis only passes over part of the centrifugal chamber length, the cross-section of the intake jet having a compact shape and a flow from which heavier particles have been removed through the dip pipes (3, 3A) passes out of the centrifugal chamber and the separated particles are removed through at least one skimming slot (107, 113) and/or annular clearances (6, 6A) and/or by means of a residual crude gas flow, characterized in that prior to meeting the jacket layer flow (11) the inlet flow field (7B) undergoes an expansion for adapting to the jacket layer flow (11).

2. Method according to claim 1, characterized in that a liquid is injected upstream of the centrifugal chamber.

3. Device for performing the method according to claim 1 for separating the specifically lighter and heavier fractions from a flow of a medium containing suspended materials by means of centrifugal forces, with a guide for deflecting the flow into a centrifugal chamber (1) with a longitudinal axis (A) with at least one flow inlet with an inlet cross-section, whose extension parallel to the centrifugal chamber axis only passes over part of the centrifugal chamber length, the centrifugal chamber having two dip pipes (3, 3A) coaxial and homologous to the median plane thereof and projecting into the central area thereof for sucking off the lighter fraction and the centrifugal chamber housing comprises a circumferential jacket with centrifugal chamber bases located at the axial ends and in which the dip pipes are inserted, the centrifugal chamber being provided for the purpose of discharging the specifically heavier fraction with annular clearances (6, 6A) and/or skimming slots and/or a residual crude gas channel, the annular clearances being located between the outer edge of the centrifugal chamber bases (4, 4A) and the jacket and the skimming slots (107, 113) are located within the centrifugal chamber jacket and the jacket has a closed, rotationally symmetrical basic shape, characterized in that the inlet (7) is constructed in such a way that it permits an expansion of the inlet flow field (7B) adapted to the jacket layer flow (11).

4. Device according to claim 3, characterized in that there is at least one flow guidance bed (10) in the vicinity of the inlet (7).

5. Device according to claim 3, characterized in that the inlet has a substantially rectangular to oval flow cross-section, which forms a flow guidance bed (10).

6. Device according to claim 3, characterized in that the inlet is constructed as a pipe inlet (13A, 13B, 13C) with a random cross-section.

7. Device according to claim 3, characterized in that the inlet (23) has an adapted shape.

8. Device according to claim 3, characterized in that the pipe inlet is constructed as a straight inlet guidance section (24).

9. Device according to claim 3, characterized in that the inlet (29) has a retracted shape.

10. Device according to claim 9, characterized in that the retracted inlet is formed by a profile with an open cross-section, such as a U-profile (47).

11. Device according to claim 9, characterized in that the retracted inlet essentially comprises a tongue (57) with a tongue trailing edge (61) and an inlet trailing edge (62, 71).

12. Device according to claim 9, characterized in that the retracted inlet with a tongue (57A) has a slotted support (64).

13. Device according to claim 9, characterized in that the retracted inlet is formed in that in the median plane of the centrifugal chamber (1) is fitted a narrow slit (65) up to the tongue trailing edge (68) and the resulting tongue halves (67, 67A) are swung in around wedge-shaped inlet boundaries (66, 66A), a gap (69) being formed between the tongue halves (67, 67A).

14. Device according to claim 13, characterized in that the gap (69) is closed by a soldered sheet metal support (70) contacting the inlet trailing edge (71).

15. Device according to claim 3, characterized in that the centrifugal chamber (1) has a rotationally symmetrical outer housing and a multiple arrangement of retracted inlets.

16. Device according to claim 3, characterized in that the centrifugal chamber housing has an annular housing (92) symmetrical to the median plane and an inner cylinder jacket (94) symmetrical thereto, so that symmetrical, annular nozzles (95) are formed in pairs.

17. Device according to claim 3, characterized in that the centrifugal chamber has two symmetrical inlet housings (99, 99A).

18. Device according to claim 3, characterized in that the centrifugal chamber has a circumferential spiral housing (100) of random cross-section.

19. Device according to one of the claims 3 to 18, characterized in that the centrifugal chamber housing jacket (116) is barrel-shaped or biconical, respectively biconical with a cylindrical central part.

20. Device according to one of the claims 3 to 19, characterized in that the inlet is provided with a flange (117).

21. Device according to one of the claims 3 to 19, characterized in that the centrifugal chamber housing (H) has several inlets.

22. Device according to one of the claims 7 to 19, characterized in that the inlet has an inlet nozzle (116B) as an accelerating section.

23. Device according to one of the claims 3 to 22, characterized in that it has at least one injection nozzle (139).

24. Device according to one of the claims 3 to 23, characterized in that one or more injection nozzles (139) are placed in one or more distribution channels upstream of the device.

## Revendications

1. Procédé pour séparer et/ou éliminer des particules solides et/ou liquides de milieux gazeux et/ou liquides, pour séparer des mélanges gazeux et/ou des mélanges liquides, ainsi que pour tamiser et/ou trier, avec un séparateur à cyclone (1) comportant des tubes plongeurs (3, 3A) qui pénètrent sensiblement coaxialement et de manière parfaitement symétrique dans la chambre de cyclone (1), le flux de produit à séparer étant introduit tangentiellement en au moins un jet d'alimentation, avec une zone d'écoulement d'alimentation (7B) située dans la région centrale axiale de la chambre de cyclone et génère ainsi un écoulement laminaire (11) périphérique au voisinage de la paroi, avec une section transversale du jet d'alimentation dont l'étendue dans la direction parallèle à l'axe de la chambre de cyclone correspond seulement à une partie de la longueur de la chambre de cyclone, la section transversale du jet d'alimentation présentant une forme plutôt aplatie, un flux débarrassé des particules lourdes sortant de la chambre de cyclone par les tubes plongeurs (3, 3A) et les particules séparées étant évacuées par au moins une ouïe de prélèvement (107, 113) et/ou par des fentes annulaires (6, 6A) et/ou à l'aide d'un flux de gaz brut résiduel, caractérisé par le fait que la zone d'écoulement d'alimentation (7B) présente un élargissement avant l'entrée en contact avec l'écoulement laminaire périphérique (1) aux fins d'adapter l'écoulement à l'écoulement laminaire périphérique (1).

2. Procédé selon la revendication 1, caractérisé par le fait qu'un liquide est injecté en amont de la chambre de cyclone.

3. Dispositif pour la mise en oeuvre du procédé selon la revendication 1, pour éliminer par la force centrifuge les fractions de poids spécifique plus faible et les fractions de poids spécifique plus lourd dans un flux de milieu contenant des matières en suspension, comportant un moyen de guidage pour dévier le flux dans une chambre de cyclone (1) présentant un axe longitudinal (A), au moins une ouverture d'alimentation avec une section d'ouverture d'alimentation dont l'étendue dans la direction parallèle à l'axe de la chambre de cyclone correspond seulement à une partie de la longueur de la chambre de cyclone, la chambre de cyclone comportant deux tubes plongeurs (3, 3A) coaxiaux, symétriques par rapport au plan médian de la chambre, qui pénètrent dans la région centrale de ladite chambre pour aspirer la fraction plus légère et la cuve de la chambre de cyclone étant formée d'une enveloppe circulaire avec, aux extrémités axiales de celle-ci, des fonds de chambre de cyclone dans lesquels sont montés les tubes plongeurs, la chambre de cyclone, pour éliminer les fractions de poids spécifique plus élevé, comportant des fentes annulaires (6, 6A) et/ou des ouïes de prélèvement et/ou un canal de gaz brut résiduel, les fentes annulaires étant aménagés entre le bord extérieur des fonds de chambre de cyclone (4, 4A) et l'enveloppe et les ouïes de prélèvement (107, 113) étant disposées dans l'enveloppe de la chambre de cyclone et l'enveloppe présentant une forme de base symétrique de révolution, caractérisé par le fait que l'ouverture d'alimentation (7) est conformée de manière à permettre un élargissement de la zone d'écoulement d'alimentation (7B) adapté à l'écoulement laminaire périphérique (11).

4. Dispositif selon la revendication 3, caractérisé par le fait qu'au moins un guide-déflecteur (10) est disposé dans la région de l'ouverture d'alimentation (7).

5. Dispositif selon la revendication 3, caractérisé par le fait que l'ouverture d'alimentation présente une section d'écoulement essentiellement rectangulaire à ovale qui forme un guide-déflecteur (10).

6. Dispositif selon la revendication 3, caractérisé par le fait que. l'ouverture d'alimentation est réalisée sous la forme de tubes d'entrée (13A, 13B, 13C) de section quelconque.

7. Dispositif selon la revendication 3, caractérisé par le fait que l'ouverture d'alimentation (23) présente une forme adaptée.

8. Dispositif selon la revendication 3, caractérisé par le fait que l'ouverture d'alimentation tubulaire est conformée en tronçon de guidage d'entrée (24) rectiligne.

9. Dispositif selon la revendication 3, caractérisé par le fait que l'ouverture d'alimentation (29) présente une forme rentrante.

10. Dispositif selon la revendication 9, caractérisé par le fait que l'ouverture d'alimentation rentrante est formée d'un profilé à section ouverte, comme par exemple un profilé en U (47).

11. Dispositif selon la revendication 9, caractérisé par le fait que l'ouverture d'alimentation rentrante comprend essentiellement une plaque en forme de languette (57) avec une arête postérieure de languette (61) et une arête dorsale (62, 71)

12. Dispositif selon la revendication 9, caractérisé par le fait que l'ouverture d'alimentation rentrante pourvue d'une plaque en forme de languette (57A) présente un moyen d'espacement (64).

13. Dispositif selon la revendication 9, caractérisé par le fait que l'ouverture d'alimentation rentrante est réalisée en pratiquant dans le plan médian de la chambre de cyclone (1), une entaille étroite (65) qui s'étend jusqu'à l'arête postérieure de la languette (68) et en rabattant les moitiés de languette (67, 67A) ainsi formées vers l'intérieur, autour de lignes (66, 66A) qui définissant un coin, une fente (69) étant formée entre les moitiés de languette (67, 67A).

14. Dispositif selon la revendication 13, caractérisé par le fait que la fente (69) est fermée par un support (70) en tôle pliée qui est en contact avec l'arête dorsale (71).

15. Dispositif selon la revendication 3, caractérisé par le fait que la chambre de cyclone (1) comporte une cuve extérieure symétrique de rotation et une pluralité d'ouvertures d'alimentations rentrantes.

16. Dispositif selon la revendication 3, caractérisé par le fait que la cuve de la chambre de cyclone (1) comporte une cuve annulaire (92) qui est disposée symétriquement par rapport au plan médian et une enveloppe cylindrique (94) intérieure symétrique, qui définissent des paires de buses (95) annulaires symétriques.

17. Dispositif selon la revendication 3, caractérisé par le fait que la chambre de cyclone (1) comporte deux carters d'alimentation (99, 99A) symétriques.

18. Dispositif selon la revendication 3, caractérisé par le fait que la chambre de cyclone (1) comporte un carter d'alimentation conformé en spirale (100) de section quelconque.

19. Dispositif selon une des revendications 3 à 18, caractérisé par le fait que l'enveloppe de la cuve de cyclone (116) a une forme de tonneau ou de double cône ou de double cône avec une partie intermédiaire cylindrique.

20. Dispositif selon une des revendications 3 à 19, caractérisé par le fait que l'ouverture d'alimentation est munie d'une bride (117).

21. Dispositif selon une des revendications 3 à 19, caractérisé par le fait que la cuve de chambre de cyclone (H) comporte plusieurs ouvertures d'alimentation.

22. Dispositif selon une des revendications 7 à 19, caractérisé par le fait que l'ouverture d'alimentation comporte une tuyère d'entrée (116B) comme tronçon de mise en vitesse.

23. Dispositif selon une des revendications 3 à 22, caractérisé par le fait qu'il comporte au moins une buse d'injection (139).

24. Dispositif selon une des revendications 3 à 23, caractérisé par le fait qu'une ou plusieurs buses d'injection (139) sont disposées en amont du dispositif, dans un ou plusieurs canaux répartiteurs.
